# EUROPÄISCHE PATENTSCHRIFT

(11) **EP 4 242 431 B1**
(45) Veröffentlichungstag und Bekanntmachung des Hinweises auf die Patenterteilung: **04.02.2026**
(21) Anmeldenummer: 23160222.8
(22) Anmeldetag: 06.03.2023
(51) Int. Cl.: F01M 1/12, F16N 7/40, F01M 11/00

(54) **FLUIDFÖRDERSYSTEM MIT SEPARATEM FLUIDMODUL**
FLUID CONVEYING SYSTEM WITH SEPARATE FLUID MODULE
SYSTÈME DE TRANSPORT DE FLUIDE COMPRENANT UN MODULE DE FLUIDE SÉPARÉ

(30) Priorität: 11.03.2022 DE 102022105782
(43) Veröffentlichungstag der Anmeldung: 13.09.2023
(73) Patentinhaber: Schwäbische Hüttenwerke Automotive GmbH, 73433 Aalen (DE)
(72) Erfinder: Peters, Sven, 88427 Bad Schussenried (DE); Kostic, Enis, 88422 Bad Buchau (DE); Kunzi, Harald, 71364 Winnenden (DE); Jäggle, Gerd, 88521 Ertingen (DE)
(74) Vertreter: SSM Sandmair

(56) Entgegenhaltungen:
- EP-A1- 3 205 839
- EP-A1- 3 543 476
- WO-A1-2019/077463
- DE-A1- 102014 006 004
- DE-A1- 102016 113 519

## Beschreibung

Die Erfindung betrifft ein Fluidfördersystem zur Versorgung zumindest eines Maschinenaggregats mit Fluid, insbesondere zur Versorgung eines Motors und/oder eines Getriebes eines Kraftfahrzeugs. Die Erfindung betrifft insbesondere die Versorgung eines Maschinenaggregats mit Fluid, insbesondere Öl, zur Schmierung und/oder Kühlung des Maschinenaggregats. Das Fluidfördersystem umfasst ein Gehäuse mit einem Reservoir für die Bevorratung des Fluids sowie ein Pumpenmodul zur Förderung des Fluids.

Klassische Fluidfördersysteme zur Versorgung eines Maschinenaggregats mit Fluid, insbesondere im Kraftfahrzeugbereich zur Versorgung eines Motors oder eines Getriebes mit Fluid, basieren für gewöhnlich auf einer Druckumlaufschmierung, insbesondere einer Nasssumpfschmierung, mit wenigstens einer Pumpe, welche das Fluid, insbesondere Öl, zu den zu schmierenden und/oder zu kühlenden Stellen fördert. Bei der klassischen Nasssumpfschmierung wird das Fluid beim Ablaufen von dem Maschinenaggregat in einem Reservoir, welches unterhalb des Maschinenaggregats angeordnet ist, aufgefangen und mittels der Pumpe aus dem Reservoir abgepumpt und dem Maschinenaggregat erneut zugeführt. Auf diese Weise entsteht ein Fluidkreislauf zur Schmierung und/oder Kühlung eines Maschinenaggregats, bei welchem ein Fluid im Kreislauf gefördert wird. Die EP3205839A1 offenbart ein Beispiel von solch ein Fluidfördersytem.

Derartige Fluidfördersysteme umfassen für gewöhnlich wenigstens ein Filtermodul zur Filterung des Fluids von Partikeln und/oder Verschmutzungen, bevor es dem Maschinenaggregat zugeführt wird. Das heißt, die Pumpe fördert das Fluid zunächst durch einen Ölfilter, bevor es dem Maschinenaggregat zugeführt wird.

Derartige Fluidfördersysteme haben zum einen den Nachteil, dass solche Filtermodule einen hohen Strömungswiderstand darstellen und die Pumpen zur Förderung des Fluids auf Grund des Filtermoduls einen hohen Leistungsbedarf aufweisen, um das Maschinenaggregat zuverlässig mit Fluid zu versorgen. Insbesondere im Kraftfahrzeugbereich kann dies beispielsweise zu einem erhöhten Treibstoffverbrauch bzw. Stromverbrauch und/oder einer verminderten Reichweite führen.

Des Weiteren haben diese Fluidfördersysteme den Nachteil, dass sie beispielsweise in extremen Fahrsituationen des Kraftfahrzeugs Luft ansaugen können. So kann beispielsweise eine Kurvenfahrt und/oder ein starkes Beschleunigen oder Bremsmanöver aus hoher Geschwindigkeit des Kraftfahrzeugs dazu führen, dass die entstehenden Fliehkräfte das Fluid, insbesondere Öl, innerhalb des Reservoirs von der Absaugstelle wegdrücken, sodass an der Absaugstelle neben Fluid auch Luft oder ausschließlich Luft angesaugt wird. Dies kann zu einer Unterbrechung der Versorgung des Maschinenaggregats mit Fluid führen und je nach Dauer der Unterbrechung, sowie Temperatur und/oder Zustand des Maschinenaggregats, insbesondere des Motors und/oder des Getriebes des Kraftfahrzeugs, fatale Folgen haben. Im schlimmsten Fall kann dies zu einem Motor- und/oder Getriebeschaden eines Kraftfahrzeugs führen.

Daher haben sich Alternativen zu der klassischen Nasssumpfschmierung entwickelt, welche ein Ansaugen von Luft verhindern sollen. Aus dem Stand der Technik sind beispielsweise, Nasssumpfschmierungen bekannt, bei denen das Reservoir sogenannte Ölschwallsperren, insbesondere Schwallbleche oder Schottbleche, umfasst, um zu verhindern, dass das Fluid bei großen Fliehkräften, insbesondere bei hohen Querbeschleunigungen, wie sie beispielsweise bei Kurvenfahrten entstehen, von der Absaugstelle weggedrückt wird. Auch hat es sich bewährt, die Pumpe bzw. die Absaugstelle an einer sehr tiefen Stelle des Reservoirs auszubilden, welche beispielsweise in Form einer trichterförmigen Vertiefung in dem Reservoir ausgebildet ist, so dass auch bei extremen Fahrsituationen möglichst immer genug Fluid im Bereich der Absaugstelle vorhanden ist.

Nachteil solcher Nasssumpfschmierungen ist, dass diese aufgrund der Ausgestaltung des Reservoirs mit einer Vertiefung einen hohen Platzbedarf, insbesondere in ihrer vertikalen Erstreckung, aufweisen. Dies führt dazu, dass beispielsweise ein Motor mit integrierter Nasssumpfschmierung innerhalb des Kraftfahrzeugs relativ weit oben verbaut werden muss, um ausreichend Platz für das Reservoir zur Verfügung zu haben. Dies führt zu einem hohen Schwerpunkt des Kraftfahrzeugs, was sich negativ auf das Fahrverhalten des Kraftfahrzeugs ausüben kann.

Als Alternative zu der Nasssumpfschmierung hat sich daher die sogenannte Trockensumpfschmierung entwickelt. Diese kommt insbesondere bei Hochleistungsmotoren und/oder Gelände- oder Sportwägen zum Einsatz. Bei der Trockensumpfschmierung wird das Fluid aus einer Ölwanne, in welche das Fluid nach der Versorgung des Maschinenaggregats zurückfließt, mittels einer Pumpe abgesaugt und einem separaten Ölbehälter zugeführt. Der Ölbehälter dient wiederum der Versorgung des Maschinenaggregats, indem das Fluid aus dem Ölbehälter mittels einer weiteren Pumpe abgesaugt und dem Maschinenaggregat zugeführt wird.

Die Trockensumpfschmierung hat den Vorteil, dass sie das Maschinenaggregat zuverlässig schmiert, da sie gegenüber Fliehkräften weniger anfällig ist und die Absaugstelle des Ölbehälters aktiv mit Öl versorgt wird. Außerdem kann durch einen großen Ölbehälter die Kühlwirkung des Fluids verbessert werden und durch eine flache Ölwanne, welche unterhalb des Maschinenaggregats ausgebildet ist, die Bauhöhe des Maschinenaggregats verringert werden, wodurch der Schwerpunkt des Kraftfahrzeugs herabgesetzt werden kann. Letzteres ist insbesondere für flache Kraftfahrzeuge, wie zum Beispiel Sportwägen, von Vorteil. Zudem kann der Ölbehälter durch seine separate Ausbildung an einer beliebigen Stelle verbaut werden, da das Fluid von dem Maschinenaggregat zunächst in die Ölwanne abfließt und aktiv zu dem Ölbehälter gefördert wird.

Diese Art der Schmierung ist zwar in Bezug auf die Versorgung des Maschinenaggregats mit Fluid sehr zuverlässig, sie ist jedoch aufgrund der hohen Anzahl zusätzlicher Bauteile fehleranfällig und vor allem kostenintensiv. So wird für die Trockensumpfschmierung neben einer zusätzlichen Pumpe, welche das Fluid von der Ölwanne zu dem Ölbehälter fördert, neben der Ölwanne ein weiterer Ölbehälter für die Bevorratung des Fluids benötigt. Zudem hat die Trockensumpfschmierung insbesondere auf Grund des separat ausgebildeten Ölbehälters insgesamt einen höheren Platzbedarf als eine klassische Nasssumpfschmierung.

Es ist eine Aufgabe der Erfindung, ein Fluidfördersystem zur Versorgung zumindest eines Maschinenaggregats mit Fluid bereitzustellen, das das Maschinenaggregat zuverlässig mit Fluid versorgt und einen reduzierten Leistungsbedarf aufweist.

Die Aufgabe wird durch das Fluidfördersystem nach Anspruch 1 gelöst.

Das Fluidfördersystem zur Versorgung zumindest eines Maschinenaggregats mit Fluid, insbesondere zur Versorgung eines Motors und/oder eines Getriebes eines Kraftfahrzeugs, umfasst ein Gehäuse mit einem Reservoir für die Bevorratung des Fluids. Wenn im Zuge der Anmeldung Bezug auf das Maschinenaggregat genommen wird, kann dies auch mehrere Maschinenaggregate umfassen, soweit nicht anders angegeben. Das zumindest eine zu versorgende Maschinenaggregat kann eine ein Getriebe und einen Elektromotor umfassende E-Maschine sein. Das Getriebe der E-Maschine kann beispielsweise ein erstes zu versorgendes Maschinenaggregat bilden und der Elektromotor kann ein zweites zu versorgendes Maschinenaggregat bilden.

Die E-Maschine dient vorzugsweise dem Antrieb eines Kraftfahrzeugs und bildet das Hauptaggregat des Kraftfahrzeugs. Bei dem Getriebe kann es sich um ein Untersetzungsgetriebe bzw. Reduktionsgetriebe handeln, dass die Drehzahl des Elektromotors heruntersetzt. Das Getriebe kann einen oder mehrere, insbesondere zwei, Gänge umfassen. Das Fluid kann beispielsweise durch ein Öl gebildet sein. Handelt es sich bei dem zu versorgenden Maschinenaggregat um eine E-Maschine mit einem Getriebe und einem Elektromotor, kann das Getriebe den Hauptabnehmer des Fluidfördersystems bilden und der Elektromotor, insbesondere die Antriebswelle, den Nebenabnehmer.

Das Gehäuse kann ein erstes Gehäuseteil, insbesondere einen Gehäusetopf, und ein zweites Gehäuseteil, insbesondere einen Gehäusedeckel, umfassen. Das Gehäuse kann einen ersten Sauganschluss und einen zweiten Sauganschluss umfassen. Über den ersten Sauganschluss und den zweiten Sauganschluss kann das Fluid beispielsweise aus dem Gehäuse abfließen, insbesondere abgesaugt werden. Des Weiteren kann das Gehäuse einen ersten Druckanschluss und/oder einen zweiten Druckanschluss umfassen. Über den ersten Druckanschluss und/oder den zweiten Druckanschluss kann insbesondere Fluid dem Gehäuse zugeführt werden. In bevorzugten Ausführungsformen umfasst das Gehäuse einen ersten Druckanschluss und einen zweiten Druckanschluss. Alternativ kann das Gehäuse nur einen Druckanschluss, insbesondere den zweiten Druckanschluss, umfassen.

Des Weiteren kann das Fluidfördersystem, insbesondere das Gehäuse, eine erste Rücklauföffnung und/oder eine zweite Rücklauföffnung umfassen. Über die erste Rücklauföffnung und/oder die zweite Rücklauföffnung kann Fluid von dem zu versorgenden Maschinenaggregat oder den zu versorgenden Maschinenaggregaten in das Gehäuse, insbesondere in das Reservoir, zurückfließen. Die erste Rücklauföffnung und/oder die zweite Rücklauföffnung können/kann mit dem Maschinenaggregat oder den Maschinenaggregaten verbindbar sein. Die erste Rücklauföffnung und die zweite Rücklauföffnung können mit demselben Maschinenaggregat verbunden sein. Alternativ kann die erste Rücklauföffnung mit einem anderen Maschinenaggregat verbunden sein wie die zweite Rücklauföffnung.

Das erste Gehäuseteil und das zweite Gehäuseteil können direkt miteinander gefügt sein, d.h., das erste Gehäuseteil und das zweite Gehäuseteil berühren einander im gefügten Zustand, insbesondere im Bereich der Fügestellen. Alternativ können das erste Gehäuseteil und das zweite Gehäuseteil indirekt miteinander gefügt werden, d.h., das erste Gehäuseteil und das zweite Gehäuseteil sind, insbesondere im Bereich der Fügestellen, über wenigstens ein weiteres Bauteil, beispielsweise eine Dichtung, miteinander verbunden. Das erste und das zweite Gehäuseteil können beispielsweise durch ein weiteres Bauteil getrennt sein.

Das erste Gehäuseteil und das zweite Gehäuseteil können kraft- und/oder formschlüssig miteinander gefügt sein. Das erste Gehäuseteil und das zweite Gehäuseteil können beispielsweise durch eine Schraub-, Niet- oder Clinchverbindung miteinander gefügt werden. Sind das erste Gehäuseteil und das zweite Gehäuseteil kraft- und/oder formschlüssig miteinander gefügt, kann zwischen dem ersten Gehäuseteil und dem zweiten Gehäuseteil eine Dichtung ausgebildet sein, welche das Gehäuse, insbesondere das Reservoir, gegenüber einem Austreten von Fluid abdichtet. Die Dichtung kann dabei durch ein separates Bauteil gebildet sein oder beispielsweise durch Dichtmasse gebildet werden.

Das erste und das zweite Gehäuseteil können stoffschlüssig miteinander gefügt sein. Das erste Gehäuseteil und das zweite Gehäuseteil können beispielsweise durch Kleben, Schweißen oder Löten miteinander gefügt sein. Sind das erste Gehäuseteil und das zweite Gehäuseteil stoffschlüssig miteinander gefügt, können das erste und das zweite Gehäuseteil über die Fügeverbindung dichtend verbunden sein. Das erste Gehäuseteil und das zweite Gehäuseteil können stoffschlüssig miteinander gefügt sein, sodass das erste Gehäuseteil und das zweite Gehäuseteil im Bereich der Fügestellen Dichtstellen ausbilden können. Das erste Gehäuseteil und das zweite Gehäuseteil können stoffschlüssig miteinander gefügt sein, sodass zumindest das in dem Gehäuse ausgebildete Reservoir im Bereich der Fügestellen umlaufend abgedichtet ist.

Das erste Gehäuseteil und das zweite Gehäuseteil können sowohl form- und/oder kraftschlüssig als auch stoffschlüssig miteinander verbunden sein. So können das erste und das zweite Gehäuseteil beispielweise miteinander verschweißt oder verklebt sein und zeitgleich durch beispielsweise eine Schraubverbindung miteinander verbunden sein. Auch können das erste und das zweite Gehäuseteil durch Positionierstifte formschlüssig miteinander verbunden sein, so dass sie gegeneinander in ihrer Position ausgerichtet sind, und durch eine stoffschlüssige Verbindung miteinander gefügt sein.

Das Gehäuse, insbesondere das erste Gehäuseteil und/oder das zweite Gehäuseteil, kann/können in einem Verfahren der Um- oder Urformung hergestellt sein. Das Gehäuse, insbesondere das erste Gehäuseteil und/oder das zweite Gehäuseteil, kann/können in einem Verfahren der Urformung, beispielsweise durch Gießen, Spritzgießen oder Sintern hergestellt sein. Alternativ kann das Gehäuse, insbesondere das erste Gehäuseteil und/oder das zweite Gehäuseteil, in einem Verfahren der Umformung, beispielsweise durch Tiefziehen, hergestellt sein. Das Gehäuse, insbesondere das erste Gehäuseteil und/oder das zweite Gehäuseteil, kann aus einem Kunststoff oder aus einem Metall hergestellt sein. Das Gehäuse, insbesondere das erste Gehäuseteil und/oder das zweite Gehäuseteil, kann beispielsweise aus Aluminium oder Stahl hergestellt sein.

Das Reservoir für die Bevorratung des Fluids kann in dem Gehäuse ausgebildet sein. Insbesondere kann das Reservoir von dem ersten Gehäuseteil und/oder dem zweiten Gehäuseteil ausgebildet, insbesondere umschlossen, sein. Das Reservoir kann beispielsweise durch einen Hohlraum in dem Gehäuse gebildet sein. Das Reservoir kann wenigstens eine Absaugstelle umfassen, an welcher das Fluid abgesaugt werden kann.

Das Reservoir kann einen Hauptsumpf und einen Nebensumpf umfassen. Umfasst das Reservoir einen Hauptsumpf und einen Nebensumpf, ist die Absaugstelle beispielsweise in dem Hauptsumpf ausgebildet. Der Hauptsumpf und der Nebensumpf können über eine Schwallblech fluidisch miteinander verbunden sein. D.h., das Fluid kann ungeachtet des Schwallblechs von dem Hauptsumpf in den Nebensumpf und umgekehrt strömen. Das Schwallblech kann zu diesem Zweck beispielweise wenigstens eine Ausnehmung aufweisen, welche den Hauptsumpf und den Nebensumpf miteinander verbindet. Alternativ oder zusätzlich kann das Schwallblech so ausgebildet sein, dass das Fluid unter Umgehung des Schwallblechs von dem Hauptsumpf in den Nebensumpf und umgekehrt strömen kann. Beispielsweise kann das Schwallblech zumindest abschnittsweise in der Höhe eine Erstreckung aufweisen, welche im Normalbetrieb des Fluidfördersystems kleiner ist als der Fluidpegel an dieser Stelle, so dass es einen Überlauf für das Fluid bildet, und/oder das Schwallblech kann in Längsrichtung unterbrochen oder kürzer ausgebildet sein als die Erstreckung des Reservoirs an dieser Stelle, so dass das Fluid an dem Schwallblech vorbeifließen kann. D.h., das Schwallblech durchmisst das Reservoir beispielsweise nicht vollständig, insbesondere in vertikaler als auch in horizontaler Erstreckung.

Das Fluidfördersystem, insbesondere das Gehäuse, kann eine erste Rücklauföffnung umfassen. Die erste Rücklauföffnung ist beispielsweise mit dem Maschinenaggregat verbindbar. Über die erste Rücklauföffnung kann das von dem Maschinenaggregat zurückfließende Fluid, insbesondere ein Teil des von dem Maschinenaggregat zurückfließenden Fluids, in das Gehäuse, insbesondere in das Reservoir, zurückfließen. Das Fluid kann von dem Maschinenaggregat über die erste Rücklauföffnung in das Reservoir, insbesondere in den Hauptsumpf des Reservoirs, zurückströmen.

Die erste Rücklauföffnung kann in Form einer Ausnehmung in dem Gehäuse ausgebildet sein. Die erste Rücklauföffnung kann in dem ersten Gehäuseteil oder dem zweiten Gehäuseteil ausgebildet sein. Über die erste Rücklauföffnung kann ein Teil des von dem Maschinenaggregat zurückfließenden Fluids unmittelbar in das Reservoir, insbesondere in den Hauptsumpf, zurückfließen. Die erste Rücklauföffnung kann mit der dem Aggregat abgewandten Seite der Öffnung in das Reservoir, insbesondere den Hauptsumpf, münden.

Das Fluidfördersystem, insbesondere das Gehäuse, kann eine zweite Rücklauföffnung umfassen. Die zweite Rücklauföffnung ist beispielsweise mit demselben Maschinenaggregat wie die erste Rücklauföffnung verbindbar. Alternativ kann die zweite Rücklauföffnung mit einem anderen Maschinenaggregat verbindbar sein. Über die zweite Rücklauföffnung kann das von einem Maschinenaggregat zurückströmende Fluid in das Gehäuse zurückströmen. Das von dem Maschinenaggregat zurückströmende Fluid kann beispielsweise über die zweite Rücklauföffnung in das Gehäuse, insbesondere beabstandet zu dem Reservoir in das Gehäuse, zurückströmen.

Die zweite Rücklauföffnung kann in Form einer Ausnehmung in dem Gehäuse ausgebildet sein. Die zweite Rücklauföffnung kann in dem ersten Gehäuseteil oder dem zweiten Gehäuseteil ausgebildet sein. Die zweite Rücklauföffnung kann über eine Ausgleichsleitung in oder an dem Gehäuse mit dem Reservoir, insbesondere mit dem Nebensumpf, verbunden sein. Alternativ oder zusätzlich kann die zweite Rücklauföffnung über eine zweite Druckleitung mit dem Reservoir, insbesondere mit dem Hauptsumpf, verbunden sein. Insbesondere mündet die zweite Rücklauföffnung mit der dem Aggregat abgewandten Seite der Öffnung nicht in das Reservoir, insbesondere nicht in den Hauptsumpf.

Die erste Rücklauföffnung und/oder die zweite Rücklauföffnung können/kann ein Sieb umfassen. Das Sieb kann auf der dem Maschinenaggregat zugewandten Seite oder auf der den Maschinenaggregaten zugewandten Seite der ersten Rücklauföffnung und/oder der zweiten Rücklauföffnung ausgebildet sein. In alternativen Ausführungen kann die erste Rücklauföffnung und/oder die zweite Rücklauföffnung auf der dem Aggregat abgewandten Seite ein Sieb aufweisen.

Die erste Rücklauföffnung und/oder die zweite Rücklauföffnung können/kann über einen ersten Rücklauf und/oder einen zweiten Rücklauf mit dem Maschinenaggregat oder den Maschinenaggregaten verbunden, insbesondere fluidisch verbunden, sein. Der erste Rücklauf und/oder der zweite Rücklauf können/kann das Maschinenaggregat oder die Maschinenaggregate über die erste Rücklauföffnung und/oder die zweiten Rücklauföffnung mit dem Reservoir verbinden. D.h., das Fluid kann von dem Maschinenaggregat oder den Maschinenaggregaten über den ersten Rücklauf und/oder den zweiten Rücklauf zurück zu dem Reservoir strömen. Der erste Rücklauf kann beispielsweise ein Maschinenaggregat, insbesondere ein Getriebe, mit der ersten Rücklauföffnung verbinden, und der zweite Rücklauf kann das gleiche oder ein anderes Maschinenaggregat, insbesondere einen Elektromotor, mit der zweiten Rücklauföffnung verbinden.

Der erste Rücklauf und/oder der zweite Rücklauf können jeweils durch eine Leitung gebildet sein, welche sich von dem mit dem jeweiligen Rücklauf verbundenen Maschinenaggregat bis zu der ersten Rücklauföffnung und/oder der zweiten Rücklauföffnung erstreckt. Alternativ, insbesondere wenn der erste Rücklauf und der zweite Rücklauf mit demselben Maschinenaggregat verbunden sind, kann der erste Rücklauf und der zweite Rücklauf durch eine gemeinsame Leitung gebildet sein, welche sich von dem Maschinenaggregat bis zur ersten Rücklauföffnung und/oder der zweiten Rücklauföffnung erstreckt. Bei dem ersten Rücklauf und/oder dem zweiten Rücklauf kann es sich um eine geschlossene Leitung oder beispielsweise um eine offene Leitung, beispielsweise innerhalb des Aggregatsgehäuses, handeln. Im Falle einer offenen Leitung kann das Fluid beispielsweise durch das entsprechende Aggregatsgehäuse frei in Richtung des Gehäuses, insbesondere des Reservoirs, strömen. Das Gehäuse kann unterhalb des Maschinenaggregats bzw. unterhalb der Maschinenaggregate ausgebildet, so dass das Fluid unter Einfluss der Schwerkraft in Richtung des Gehäuses strömen kann.

Das Fluidfördersystem kann eine erste Pumpe und eine zweite Pumpe umfassen. Die erste Pumpe kann vorzugsweise Fluid aus dem Reservoir ansaugen und in Richtung zumindest eines Maschinenaggregats fördern. Die erste Pumpe ist insbesondere eine Versorgungspumpe zur Versorgung zumindest eines Maschinenaggregats mit Fluid. Die erste Pumpe kann beispielsweise auf ihrer Niederdruckseite Fluid aus dem Reservoir, insbesondere aus dem Hauptsumpf, ansaugen. Insbesondere kann die erste Pumpe beispielsweise auf ihrer Niederdruckseite Fluid aus dem Reservoir über die Absaugstelle ansaugen. Die erste Pumpe fördert vorzugsweise auf ihrer Hochdruckseite Fluid zu dem Maschinenaggregat.

Die zweite Pumpe ist vorzugsweise stromab der ersten Pumpe angeordnet. Insbesondere kann die zweite Pumpe Fluid von der Hochdruckseite der ersten Pumpe ansaugen. Insbesondere kann die zweite Pumpe stromab des zumindest einen Maschinenaggregats angeordnet sein. Die zweite Pumpe kann beispielsweise Fluid stromab des zumindest einen Maschinenaggregats ansaugen. Die zweite Pumpe kann auf ihrer Niederdruckseite beispielsweise Fluid aus dem Gehäuse ansaugen. Insbesondere kann die zweite Pumpe auf ihrer Niederdruckseite Fluid abseits des Reservoirs aus dem Gehäuse ansaugen. Die zweite Pumpe fördert vorzugsweise auf ihrer Hochdruckseite Fluid zu dem Reservoir, insbesondere zu dem Hauptsumpf des Reservoirs.

Die erste Pumpe und die zweite Pumpe können über einen gemeinsamen Antrieb angetrieben werden. Alternativ kann die erste Pumpe einen eigenen Antrieb aufweisen und die zweite Pumpe kann einen eigenen Antrieb aufweisen. Der Antrieb der ersten Pumpe und/oder der zweiten Pumpe kann durch einen Elektromotor gebildet sein.

Das Fluidfördersystem kann ferner ein Pumpenmodul zur Förderung des Fluids umfassen. Die erste Pumpe und die zweite Pumpe können Bestandteil des Pumpenmoduls sein. Das Pumpenmodul kann das Fluid von der Absaugstelle des Reservoirs absaugen und dem Maschinenaggregat zuführen. Das Fluidfördersystem umfasst ferner einen Antrieb zum Antreiben des Pumpenmoduls. Der Antrieb kann beispielsweise einen Elektromotor umfassen. In alternativen Ausführungen kann der Antrieb das mit Fluid zu versorgende Maschinenaggregat umfassen.

Das Pumpenmodul kann einen ersten Einlass, einen zweiten Einlass, einen ersten Auslass und einen zweiten Auslass umfassen. Vorzugsweise sind der erste Einlass und/oder der zweite Einlass auf einer Niederdruckseite des Pumpenmoduls ausgebildet. Des Weiteren können der erste Auslass und/oder der zweite Auslass auf einer Hochdruckseite des Pumpenmoduls ausgebildet sein.

Der erste Einlass kann mit dem ersten Sauganschluss des Gehäuses verbunden sein, insbesondere direkt verbunden. Das Pumpenmodul kann beispielsweise Fluid aus dem Gehäuse, insbesondere aus dem Reservoir, über den ersten Sauganschluss und den ersten Einlass ansaugen. Insbesondere kann das Pumpenmodul über den ersten Einlass Fluid aus dem Hauptsumpf ansaugen und über den ersten Auslass zu dem Maschinenaggregat fördern. Der zweite Einlass ist beispielsweise mit dem zweiten Sauganschluss des Gehäuses verbunden, insbesondere direkt verbunden. Das Pumpenmodul kann beispielsweise Fluid aus dem Gehäuse über den zweiten Einlass und insbesondere über den zweiten Sauganschluss ansaugen.

Der erste Auslass kann mit dem ersten Druckanschluss des Gehäuses verbunden sein, insbesondere direkt verbunden. Der zweite Auslass ist beispielsweise mit dem zweiten Druckanschluss des Gehäuses verbunden, insbesondere direkt verbunden. Das Pumpenmodul kann dem Gehäuse, insbesondere einer ersten Druckleitung in dem Gehäuse, Fluid über den ersten Druckanschluss und den ersten Auslass zuführen. Alternativ kann der erste Auslass auch über eine Druckleitung unter Umgehung des Gehäuses mit dem Maschinenaggregat verbunden sein. Das Pumpenmodul kann dem Gehäuse, insbesondere dem Reservoir, Fluid über den zweiten Druckanschluss und den zweiten Auslass zuführen. Durch die Ausbildung der ersten Druckleitung in dem Gehäuse kann das Fluidfördersystem insbesondere platzsparend ausgebildet sein.

Das Pumpenmodul kann beispielsweise über den zweiten Einlass Fluid aus dem Gehäuse ansaugen und Fluid über den zweiten Auslass an das Reservoir abgeben, insbesondere an den Hauptsumpf abgeben. Das Pumpenmodul kann beispielsweise über den ersten Einlass Fluid aus dem Reservoir, insbesondere aus dem Hauptsumpf, ansaugen und das Fluid über den ersten Auslass an das Maschinenaggregat abgeben.

Das Pumpenmodul kann die erste Pumpe und die zweite Pumpe umfassen. Alternativ kann das Pumpenmodul eine mehrkreisige, insbesondere zweikreisige Pumpe, mit wenigstens einer ersten Arbeitsflut und einer zweiten Arbeitsflut umfassen. Beispielsweise kann das Pumpenmodul eine doppelhubige Flügelzellenpumpe umfassen.

Die erste Pumpe kann beispielsweise das Fluid über den ersten Einlass ansaugen. Insbesondere kann die Niederdruckseite der ersten Pumpe fluidisch mit dem ersten Einlass des Pumpengehäuses verbunden sein. Die erste Pumpe kann das Fluid über den ersten Auslass abgeben. Insbesondere kann die erste Pumpe auf ihrer Hochdruckseite fluidisch mit dem ersten Auslass des Pumpenmoduls verbunden sein.

Die zweite Pumpe kann beispielsweise das Fluid über den zweiten Einlass ansaugen. Insbesondere kann die zweite Pumpe auf ihrer Niederdruckseite fluidisch mit dem zweiten Einlass des Pumpenmoduls verbunden sein. Die zweite Pumpe kann das Fluid über den zweiten Auslass abgeben. Insbesondere kann die zweite Pumpe auf ihrer Hochdruckseite fluidisch mit dem zweiten Auslass verbunden sein.

Die erste Pumpe und/oder die zweite Pumpe können in einem Pumpengehäuse angeordnet sein. Insbesondere können die erste Pumpe und die zweite Pumpe in einem gemeinsamen Pumpengehäuse angeordnet sein. Das Pumpengehäuse kann zeitgleich das Gehäuse des Pumpenmoduls bilden. Insbesondere kann das Pumpengehäuse das Gehäuse des Pumpenmoduls sein.

Das Pumpengehäuse kann durch das Gehäuse ausgebildet sein. Das Pumpengehäuse kann ein von dem Gehäuse separates Pumpengehäuse sein. Das Pumpengehäuse kann mit dem Gehäuse verbunden, insbesondere verschraubt sein. Beispielsweise kann das Pumpengehäuse in einen Aufnahmeschacht des Gehäuses eingeschoben sein oder an einer Außenseite des Gehäuses mit dem Gehäuse verbunden sein. Das Pumpengehäuse kann auch von dem Gehäuse beabstandet ausgebildet sein, so dass das Gehäuse und das Pumpengehäuse beispielsweise nur über Fluidleitungen miteinander verbunden sind.

In dem Pumpengehäuse kann zusätzlich der Antrieb für das Pumpenmodul, insbesondere für die erste Pumpe und/oder die zweite Pumpe, ausgebildet sein. Der Antrieb kann die erste Pumpe und/oder die zweite Pumpe antreiben. Der Antrieb kann vorzugsweise die erste Pumpe und die zweite Pumpe antreiben. Das Pumpenmodul und der Antrieb können gemeinsam in dem separat gebildeten Pumpengehäuse ausgebildet sein. Das Pumpengehäuse kann mit dem Gehäuse verbunden sein, insbesondere verschraubt sein.

Die erste Pumpe und/oder die zweite Pumpe können durch eine Rotationspumpe gebildet sein. Insbesondere kann die erste Pumpe und/oder die zweite Pumpe durch eine Innenzahnradpumpe gebildet sein. In alternativen Ausführungen kann die erste Pumpe und/oder die zweite Pumpe auch durch eine Flügelzellenpumpe, Pendelschieberpumpe oder anderweitige Rotationspumpe gebildet sein.

Die erste Pumpe und die zweite Pumpe können die gleiche Bauweise aufweisen, beispielsweise können die erste Pumpe und die zweite Pumpe beide durch eine Innenzahnradpumpe, Flügelzellenpumpe oder Pendelschieberpumpe gebildet sein. In alternativen Ausführungen können die erste Pumpe und die zweite Pumpe eine unterschiedliche Bauweise aufweisen, so kann beispielsweise die erste Pumpe durch eine Innenzahnradpumpe und die zweite Pumpe durch eine Flügelzellenpumpe gebildet sein. In alternativen Ausführungen kann auch die erste Pumpe durch eine Flügelzellenpumpe und die zweite Pumpe durch eine Innenzahnradpumpe gebildet sein.

Die erste Pumpe und die zweite Pumpe können den gleichen Antrieb aufweisen. Insbesondere kann ein Rotor der ersten Pumpe und ein Rotor der zweiten Pumpe eine gemeinsame Antriebswelle aufweisen. Insbesondere kann der Rotor der ersten Pumpe auf derselben Antriebswelle wie der Rotor der zweiten Pumpe angeordnet sein. Die Antriebswelle kann durch den Antrieb angetrieben werden oder Teil des Antriebs sein.

Das Pumpenmodul kann eine sich von dem ersten Einlass bis zu dem zweiten Auslass erstreckende erste Arbeitsflut umfassen. Des Weiteren kann das Pumpenmodul eine sich von dem zweiten Einlass bis zu dem zweiten Auslass erstreckende zweite Arbeitsflut umfassen. Die erste Arbeitsflut und die zweite Arbeitsflut können fluidisch voneinander getrennt sein. Die erste Pumpe ist vorzugsweise in der ersten Arbeitsflut ausgebildet. Insbesondere bildet der Arbeitskreislauf der ersten Pumpe vorzugsweise die erste Arbeitsflut des Pumpenmoduls. Die zweite Pumpe ist vorzugsweise in der zweiten Arbeitsflut ausgebildet. Insbesondere bildet der Arbeitskreislauf der zweiten Pumpe vorzugsweise die zweite Arbeitsflut des Pumpenmoduls.

Das Pumpenmodul kann mehrflutig, insbesondere mehrkreisig, ausgebildet sein. Insbesondere kann das Pumpenmodul zweiflutig, insbesondere zweikreisig, ausgebildet sein. In mehrflutigen Ausführungen kann der erste Auslass des Pumpenmoduls ein für die mehreren Arbeitsfluten gemeinsamer Auslass sein und/oder der erste Einlass ein für die mehreren Arbeitsfluten gemeinsamer Einlass sein. Im Gegensatz dazu sind bei einer mehrkreisigen Ausführung die einzelnen Arbeitsfluten gegeneinander abgedichtet. Das bedeutet, jede Arbeitsflut hat einen eigenen Einlass und einen eigenen Auslass.

Das Pumpenmodul kann mehrkreisig, insbesondere zweikreisig, mit einer ersten Arbeitsflut und einer zweiten Arbeitsflut ausgebildet sein. Die erste Arbeitsflut ist vorzugsweise von der zweiten Arbeitsflut fluidisch abgedichtet. Der erste Einlass kann den Einlass der ersten Arbeitsflut bilden, und der zweite Einlass kann den Einlass der zweiten Arbeitsflut bilden. Der erste Auslass kann den Auslass für die erste Arbeitsflut bilden, und der zweite Auslass kann den Auslass für die zweite Arbeitsflut bilden.

Die erste Arbeitsflut umfasst vorzugsweise eine erste Niederdruckseite und eine erste Hochdruckseite. Die erste Niederdruckseite kann sich von dem Reservoir bis in die Förderkammer der ersten Pumpe erstrecken. Die erste Hochdruckseite kann sich von der Förderkammer der ersten Pumpe bis in das Reservoir erstrecken. Die zweite Arbeitsflut kann eine zweite Niederdruckseite und eine zweite Hochdruckseite umfassen. Die zweite Niederdruckseite kann sich von dem Gehäuse bis in die Förderkammer der zweiten Pumpe erstrecken. Die zweite Hochdruckseite kann sich von der Förderkammer der zweiten Pumpe bis in das Reservoir erstrecken. Die zweite Niederdruckseite kann insbesondere stromab der ersten Hochdruckseite ausgebildet sein. D.h., die zweite Arbeitsflut kann auf ihrer Niederdruckseite Fluid von der Hochdruckseite der ersten Arbeitsflut ansaugen.

Die erste Arbeitsflut kann beispielsweise auf der ersten Niederdruckseite Fluid aus dem Reservoir, insbesondere aus dem Hauptsumpf, ansaugen. Insbesondere kann die erste Arbeitsflut beispielsweise auf der ersten Niederdruckseite Fluid aus dem Reservoir über die Absaugstelle ansaugen. Die erste Arbeitsflut fördert vorzugsweise auf ihrer ersten Hochdruckseite Fluid zu dem Maschinenaggregat.

Die zweite Arbeitsflut kann auf der zweiten Niederdruckseite beispielsweise Fluid aus dem Gehäuse ansaugen. Insbesondere saugt die zweite Arbeitsflut auf der zweiten Niederdruckseite Fluid vorzugsweise abseits des Reservoirs aus dem Gehäuse an. Die zweite Arbeitsflut fördert vorzugsweise auf der zweiten Hochdruckseite Fluid zu dem Reservoir, insbesondere zu dem Hauptsumpf des Reservoirs.

Vorzugsweise dient die erste Pumpe der Versorgung des Maschinenaggregats mit Fluid. Insbesondere kann die erste Pumpe Fluid aus dem Reservoir, insbesondere aus dem Hauptsumpf, ansaugen und in Richtung des Maschinenaggregats abgeben. Die zweite Pumpe kann als Lenzpumpe ausgebildet sein. Insbesondere kann die zweite Pumpe Fluid in das Reservoir, insbesondere in den Hauptsumpf, fördern. Die zweite Pumpe kann Fluid, welches sich innerhalb des Gehäuses und außerhalb des Hauptsumpfes und/oder des Nebensumpfes befindet, in das Reservoir, insbesondere in den Hauptsumpf, fördern. Bevorzugt fördert die zweite Pumpe Fluid, welches sich innerhalb des Gehäuses und außerhalb des Reservoirs befindet, in das Reservoir, insbesondere in den Hauptsumpf. Die zweite Pumpe kann Fluid, welches von dem Maschinenaggregat über die zweite Rücklauföffnung in das Gehäuse strömt, ansaugen.

Das Fluidfördersystem kann einen Versorgungsstrom und einen Teilstrom umfassen. Der Teilstrom fördert beispielsweise einen Teil des Fluids des Versorgungsstroms, das zu dem Gehäuse zurückströmt. Der Versorgungsstrom, insbesondere der Teil des Versorgungsstroms, der nicht durch den Teilstrom gefördert wird, und der Teilstrom können in dem Reservoir, insbesondere in dem Hauptsumpf, aufeinandertreffen. Das Fluid des Versorgungsstroms und das Fluid des Teilstroms werden vorzugsweise in dem Reservoir, insbesondere in dem Hauptsumpf, vermischt. Der Versorgungsstrom wird vorzugsweise durch den Fluidkreislauf der ersten Arbeitsflut gebildet. Der Teilstrom wird vorzugsweise durch den Fluidkreislauf der zweiten Arbeitsflut gebildet. Die erste Pumpe fördert vorzugsweise das Fluid des Versorgungsstroms und/oder die zweite Pumpe das Fluid des Teilstroms.

Unter dem Versorgungsstrom wird insbesondere der Fluidkreislauf, insbesondere der Volumenstrom, verstanden, welcher der Versorgung des zumindest einen Maschinenaggregats dient. Insbesondere wird unter dem Versorgungsstrom der Fluidkreislauf zur Versorgung des zumindest einen Maschinenaggregats mit Fluid aus dem Reservoir verstanden. D.h., der Versorgungsstrom wird insbesondere durch den Fluidkreislauf, welcher von dem Reservoir über das Pumpenmodul und das Maschinenaggregat bis in das Reservoir strömt, gebildet. Bevorzugt dient die erste Pumpe der Förderung des Fluids des Versorgungsstroms. D.h., bevorzugt bildet der Fluidkreislauf der ersten Pumpe den Versorgungsstrom.

Der Versorgungsstrom kann sich stromab des Reservoirs in wenigstens zwei Versorgungsteilströme zur Versorgung eines oder mehrere Maschinenaggregate mit Fluid teilen. Insbesondere kann sich der Versorgungstrom stromab des Reservoirs in einen ersten Versorgungsteilstrom und einen zweiten Versorgungsteilstrom teilen. Insbesondere kann sich der Versorgungsstrom stromaufwärts des zumindest einen Maschinenaggregats in wenigstens zwei Versorgungsteilströme teilen. Der erste Versorgungsteilstrom kann beispielsweise ein Maschinenaggregat mit Fluid versorgen, und der zweite Versorgungsteilstrom kann dasselbe oder ein anderes Maschinenaggregat mit Fluid versorgen. Handelt es sich bei dem Maschinenaggregat beispielsweise um eine E-Maschine, kann der erste Versorgungsteilstrom das Getriebe mit Fluid versorgen und der zweite Versorgungsteilstrom den Elektromotor, insbesondere die Antriebswelle, mit Fluid versorgen.

Beide Versorgungsteilströme können an unterschiedlicher Stelle von dem Maschinenaggregat in das Gehäuse zurückströmen, insbesondere in das Reservoir zurückströmen. Insbesondere kann der erste Versorgungsteilstrom über den ersten Rücklauf und der zweite Versorgungsteilstrom über den zweiten Rücklauf in das Gehäuse zurückströmen. In alternativen Ausführungen können der erste Versorgungsteilstrom und der zweite Versorgungsteilstrom über einen gemeinsamen Rücklauf in das Gehäuse zurückströmen. Insbesondere können sich die Versorgungsteilströme, bevor sie in das Gehäuse, insbesondere in das Reservoir, zurückströmen, wieder zu einem Versorgungsstrom verbinden und über die erste Rücklauföffnung und/oder die zweite Rücklauföffnung in das Gehäuse, insbesondere in das Reservoir zurückströmen.

Die Versorgungsteilströme können unterschiedlich groß sein. D.h., der Volumenstrom der einzelnen Versorgungsteilströme kann sich unterscheiden. Insbesondere kann der erste Versorgungsteilstrom größer sein als der zweite Versorgungsteilstrom. In alternativen Ausführungen können die Versorgungsteilströme gleich groß sein. Insbesondere kann der Volumenstrom der einzelnen Versorgungsteilströme jeweils gleich groß sein.

Unter dem Teilstrom wird vorzugsweise der Fluidkreislauf, insbesondere der Volumenstrom, welcher der Umwälzung des Fluids dient, verstanden. Insbesondere wird das Fluid des Teilstroms von einer Stelle abseits des Reservoirs aus dem Gehäuse in das Reservoir, insbesondere in den Hauptsumpf, gefördert. D.h., der Teilstrom wird vorzugsweise durch den Fluidkreislauf, welcher aus dem Gehäuse, insbesondere abseits des Reservoirs, über das Pumpenmodul in das Reservoir strömt, gebildet. Durch den Teilstrom kann das Fluid, insbesondere von einer Stelle abseits des Reservoirs, aus dem Gehäuse abgesaugt und dem Reservoir zugeführt. Der Teilstrom kann insbesondere auch als Lenzstrom bezeichnet werden. Bevorzugt dient die zweite Pumpe der Förderung des Fluids des Teilstroms. D.h., bevorzugt bildet der Fluidkreislauf der zweiten Pumpe den Teilstrom.

Der Teilstrom kann insbesondere Fluid des Versorgungsstroms, insbesondere das Fluid des zweiten Versorgungsteilstroms und/oder des ersten Versorgungsteilstroms, ansaugen und in Richtung des Reservoirs fördern. Insbesondere saugt der Teilstrom Fluid des Versorgungsstroms stromab des Maschinenaggregats an. In bevorzugten Ausführungen saugt der Teilstrom Fluid des zweiten Versorgungsteilstroms an, nachdem das Fluid in das Gehäuse zurückgeströmt ist, insbesondere nachdem der zweite Versorgungsteilstrom durch die zweite Rücklauföffnung in das Gehäuse zurückgeströmt ist.

Der Volumenstrom des Teilstroms kann kleiner als der Volumenstrom des Versorgungsstroms sein. Der Teilstrom kann gleich groß sein wie der zweite Versorgungsteilstrom. Teilt sich der Versorgungsstrom in einen ersten Versorgungsteilstrom und einen zweiten Versorgungsteilstrom und sind beide Versorgungsteilströme gleich groß, ist der Teilstrom beispielsweise halb so groß wie der Versorgungsstrom. Insbesondere beträgt der Volumenstrom des Teilstroms weniger als die Hälfte des Volumenstroms des Versorgungsstroms. D.h., die geförderte Fluidmenge des Teilstroms kann kleiner sein als die Fluidmenge des Versorgungsstroms, insbesondere kann die geförderte Fluidmenge des Teilstroms weniger als die Hälfte der Fluidmenge des Versorgungsstroms entsprechen. Das bedeutet, die zweite Pumpe kann insbesondere weniger Fluid als die erste Pumpe fördern. Insbesondere kann die zweite Pumpe weniger als 50 % des Fluids der ersten Pumpe fördern. Im Umkehrschluss kann der Volumenstrom der ersten Pumpe doppelt so groß sein wie der Volumenstrom der zweiten Pumpe.

Der erste Einlass des Pumpenmoduls kann über eine erste Saugleitung fluidisch mit dem Reservoir verbunden sein. Insbesondere kann das Pumpenmodul über die erste Saugleitung mit dem Hauptsumpf des Reservoirs verbunden sein. Die erste Saugleitung kann an ihrem stromaufwärtigen Ende über die Absaugstelle in das Reservoir, insbesondere in den Hauptsumpf münden.

Die erste Saugleitung kann insbesondere den ersten Einlass des Pumpenmoduls, beispielsweise über den ersten Sauganschluss, fluidisch mit dem Reservoir, insbesondere mit dem Hauptsumpf, verbinden. Die erste Saugleitung mündet bevorzugt mit ihrem stromaufwärtigen Ende in das Reservoir, insbesondere in den Hauptsumpf. Des Weiteren kann der erste Auslass über eine erste Druckleitung mit dem zumindest einen Maschinenaggregat verbunden sein. Insbesondere kann der Versorgungsstrom über die erste Saugleitung und die erste Druckleitung aus dem Reservoir zu dem zumindest einen Maschinenaggregat strömen.

Die erste Druckleitung kann in oder an dem Gehäuse gebildet sein. Insbesondere kann die erste Druckleitung ganz oder teilweise zwischen dem ersten Gehäuseteil und dem zweiten Gehäuseteil gebildet sein. Die erste Druckleitung kann ganz oder teilweise durch das erste Gehäuseteil und/oder das zweite Gehäuseteil gebildet sein. In bevorzugten Ausführungen wird die erste Druckleitung ganz oder teilweise durch das erste Gehäuseteil und das zweite Gehäuseteil ausgebildet. Insbesondere kann die erste Druckleitung mehrere Abschnitte aufweisen. Die Druckleitung kann zumindest teilweise durch das Gehäuse gebildet sein. Beispielsweise kann ein Abschnitt der Druckleitung ganz oder teilweise durch das Gehäuse gebildet sein.

Vorzugsweise verbindet die erste Druckleitung den ersten Auslass des Pumpenmoduls mit dem zumindest einen Maschinenaggregat. Das Pumpenmodul kann vorzugsweise Fluid über den ersten Einlass und die erste Saugleitung aus dem Reservoir absaugen und über den ersten Auslass und die erste Druckleitung dem Maschinenaggregat zuführen. Vorzugsweise kann das Fluid über die erste Druckleitung zu der zu versorgenden Stelle des Maschinenaggregats strömen.

Insbesondere kann sich die erste Druckleitung stromab des ersten Auslasses in eine erste Versorgungsleitung und eine zweite Versorgungsleitung teilen. Die erste Versorgungsleitung und die zweite Versorgungsleitung können als Abschnitte der ersten Druckleitung betrachtet werden. Die erste Versorgungsleitung kann beispielsweise mit einem ersten Maschinenaggregat verbunden sein. Die zweite Versorgungsleitung kann beispielsweise mit einem zweiten Maschinenaggregat verbunden sein. Insbesondere kann sich der Versorgungsstrom über die erste Versorgungsleitung und die zweite Versorgungsleitung aufteilen.

Der zweite Einlass ist vorzugsweise über eine zweite Saugleitung fluidisch mit dem Gehäuse verbunden. Die zweite Saugleitung kann sich von dem zweiten Einlass über den zweiten Sauganschluss bis zu ihrem stromaufwärtigen Ende erstrecken. Vorzugsweise verbindet die zweite Saugleitung den zweiten Einlass des Pumpenmoduls fluidisch mit dem Gehäuse. Insbesondere kann die zweite Arbeitsflut auf der zweiten Niederdruckseite Fluid über die zweite Saugleitung aus dem Gehäuse ansaugen.

Der zweite Auslass kann über eine zweite Druckleitung fluidisch mit dem Reservoir verbunden sein. Insbesondere kann die zweite Druckleitung mit ihrem stromabwärtigen Ende in den Hauptsumpf des Reservoirs münden. Vorzugsweise verbindet die zweite Druckleitung den zweiten Auslass des Pumpenmoduls mit dem Reservoir. Die zweite Druckleitung kann sich von dem zweiten Auslass über den zweiten Druckanschluss bis in das Reservoir erstrecken. Insbesondere kann die zweite Arbeitsflut auf der zweiten Hochdruckseite Fluid über die zweite Druckleitung an das Reservoir, insbesondere an den Hauptsumpf, abgeben.

Das stromaufwärtige Ende der zweiten Saugleitung kann beabstandet zu dem stromabwärtigen Ende der zweiten Druckleitung in das Gehäuse münden. Insbesondere mündet die zweite Saugleitung mit ihrem stromaufwärtigen Ende nicht in das Reservoir. Das stromaufwärtige Ende der zweiten Saugleitung mündet bevorzugt abseits des Hauptsumpfes und/oder des Nebensumpfes in das Gehäuse. Der Teilstrom kann beispielsweise durch die zweite Saugleitung und die zweite Druckleitung strömen.

In bevorzugten Ausführungen mündet das stromaufwärtige Ende der zweiten Saugleitung benachbart zu der zweiten Rücklauföffnung, insbesondere stromab der zweiten Rücklauföffnung, in das Gehäuse. Das stromaufwärtige Ende der zweiten Saugleitung mündet bevorzugt auf der dem zumindest einen Maschinenaggregat abgewandten Seite der zweiten Rücklauföffnung in das Gehäuse. Insbesondere ist das stromaufwärtige Ende der zweiten Saugleitung auf der dem zumindest einen Maschinenaggregat abgewandten Seite des Siebs der zweiten Rücklauföffnung ausgebildet.

In alternativen Ausführungen kann das stromaufwärtige Ende der zweiten Saugleitung benachbart zu der zweiten Rücklauföffnung, insbesondere stromaufwärts der zweiten Rücklauföffnung, in den ersten Rücklauf und/oder den zweiten Rücklauf münden. Das stromaufwärtige Ende der zweiten Saugleitung kann auf der dem zumindest einen Maschinenaggregat zugewandten Seite der zweiten Rücklauföffnung in den ersten Rücklauf und/oder den zweiten Rücklauf münden. Insbesondere kann das stromaufwärtige Ende der zweiten Saugleitung auf der dem zumindest einen Maschinenaggregat zugewandten Seite des Siebs der zweiten Rücklauföffnung ausgebildet sein.

In bevorzugten Ausführungen kann das von dem Maschinenaggregat über die zweite Rücklauföffnung zurückströmende Fluid über die zweite Saugleitung, das Pumpenmodul, insbesondere die zweite Pumpe, und die zweite Druckleitung in das Reservoir, insbesondere den Hauptsumpf, strömen. Insbesondere kann das von dem Maschinenaggregat über die zweite Rücklauföffnung zurückströmende Fluid über die zweite Saugleitung und die zweite Druckleitung durch das Pumpenmodul, insbesondere durch die zweite Pumpe, in das Reservoir, insbesondere in den Hauptsumpf, gefördert/gepumpt werden. Auf diese Weise wird das Reservoir, insbesondere der Hauptsumpf, aktiv durch das Pumpenmodul, insbesondere die zweite Pumpe, mit Fluid versorgt.

Handelt es sich bei dem Maschinenaggregat um den Motor und/oder das Getriebe eines Kraftfahrzeugs, hat dies den Vorteil, dass der Hauptsumpf, insbesondere die Absaugstelle in dem Hauptsumpf, unabhängig von der Fahrsituation des Fahrzeuges mit Fluid versorgt wird. Sollte beispielsweise zu einer Fahrsituation kommen, bei welcher das Fluid von der Absaugstelle weggedrückt wird, beispielsweise in den Nebensumpf, sorgt die zweite Pumpe durch die Umwälzung des Fluids innerhalb des Gehäuses dafür, dass die Absaugstelle weiterhin mit Fluid versorgt wird. Auf diese Weise kommt es zu keiner Unterbrechung der Versorgung des Maschinenaggregats mit Fluid.

Die erste Saugleitung kann eine von dem ersten Gehäuseteil und dem zweiten Gehäuseteil ganz oder teilweise separat gebildete Leitung sein. Die erste Saugleitung kann an ihrem stromaufwärtigen Ende in das Reservoir, insbesondere in den Hauptsumpf, münden und kann sich in stromabwärtiger Richtung über den ersten Sauganschluss des Gehäuses bis zu dem ersten Einlass erstrecken. Der erste Sauganschluss des Gehäuses kann direkt oder indirekt, beispielsweise über einen Röhrenabschnitt, mit dem ersten Einlass des Pumpenmoduls verbunden, insbesondere fluidisch verbunden, sein.

Die erste Saugleitung kann nicht oder größtenteils nicht von dem ersten Gehäuseteil und/oder dem zweiten Gehäuseteil gebildet sein. Insbesondere kann die erste Saugleitung ganz oder teilweise durch einen Röhrenabschnitt gebildet sein, welcher separat von dem ersten Gehäuseteil und dem zweiten Gehäuseteil gebildet ist. Die erste Saugleitung kann ganz oder zumindest teilweise durch einen separaten Röhrenabschnitt gebildet sein, welcher zwischen dem ersten Gehäuseteil und dem zweiten Gehäuseteil angeordnet ist. Die erste Saugleitung kann ganz oder teilweise durch einen Röhrenabschnitt gebildet sein, welcher in dem Gehäuse, insbesondere innerhalb des Reservoirs, verläuft.

Der Röhrenabschnitt kann an seinem stromaufwärtigen Ende in das Reservoir münden. Insbesondere kann der Röhrenabschnitt an seinem stromaufwärtigen Ende die Absaugstelle ausbilden. Ist die erste Saugleitung ganz durch den Röhrenabschnitt gebildet, kann der Röhrenabschnitt an seinem stromabwärtigen Ende direkt mit dem ersten Einlass des Pumpenmoduls verbunden sein. Ist der Röhrenabschnitt direkt mit dem ersten Einlass des Pumpenmoduls verbunden, kann der Röhrenabschnitt den Sauganschluss des Gehäuses durchragen und/oder bündig mit dem Sauganschluss abschließen. Der Sauganschluss kann durch eine Öffnung in dem Gehäuse gebildet werden, durch welche der Röhrenabschnitt ragt oder an welche der Röhrenabschnitt anschließt.

Ist die erste Saugleitung teilweise durch einen von dem ersten Gehäuseteil und dem zweiten Gehäuseteil separaten Röhrenabschnitt ausgebildet, kann der Röhrenabschnitt an seinem stromabwärtigen Ende an das Gehäuse, insbesondere an den Sauganschluss, anschließen. Die Saugleitung kann teilweise durch einen Röhrenabschnitt und teilweise durch eine Leitung in dem Gehäuse gebildet sein. Wird die erste Saugleitung teilweise durch einen Kanal in dem Gehäuse gebildet, kann der Röhrenabschnitt an den Kanal anschließen. Wird die erste Saugleitung zu einem Teil durch einen Kanal in dem Gehäuse und zu einem anderen Teil aus einem Röhrenabschnitt gebildet, kann der Röhrenabschnitt wenigstens zweimal, insbesondere wenigstens dreimal, so lang sein wie der Kanal in dem Gehäuse. Wenigstens die Hälfte, insbesondere wenigstens zwei Drittel, der ersten Saugleitung kann durch den Röhrenabschnitt gebildet sein.

Der Röhrenabschnitt kann starr oder flexibel ausgebildet sein. Beispielsweise kann der Röhrenabschnitt durch einen flexiblen Schlauch oder ein starres Rohr gebildet sein. Der Querschnitt quer zur Strömungsrichtung des Röhrenabschnitts kann über die gesamte Länge in Form und Größe gleich sein oder in Längsrichtung variieren. Der Querschnitt quer zur Strömungsrichtung des Röhrenabschnitts kann jede Form aufweisen, insbesondere kann der Querschnitt quer zur Strömungsrichtung des Röhrenabschnitts rund, insbesondere kreisrund, oval oder eckig sein. Der Röhrenabschnitt kann aus demselben Material wie das Gehäuse ausgebildet sein oder aus einem von dem Gehäuse verschiedenen Material ausgebildet sein.

Das Fluidfördersystem kann ein Filtermodul mit wenigstens einem Filter umfassen. Das Filtermodul kann Partikel aus dem Fluid filtern, welche beispielsweise für einen Motor und/oder ein Getriebe eines Kraftfahrzeugs schädlich sind. Das Filtermodul kann ein Bypassventil umfassen. Das Bypassventil kann eine erste Ventilstellung und eine zweite Ventilstellung aufweisen. In der ersten Ventilstellung lässt das Bypassventil vorzugsweise keinen Fluidstrom durch das Bypassventil zu. In der zweiten Ventilstellung kann das Bypassventil einen Fluidstrom durch das Bypassventil, insbesondere unter Umgehung des Filters, zulassen. Vorzugsweise nimmt das Bypassventil die zweite Ventilstellung ein, wenn das Fluid zähflüssig ist. Handelt es sich bei dem Fluidfördersystem beispielsweise um ein Fluidfördersystem zur Versorgung eines Motors mit Öl, nimmt das Bypassventil beispielsweise beim Start des Motors die zweite Ventilstellung ein.

Das Filtermodul kann separat von dem Pumpengehäuse und/oder dem Gehäuse ausgebildet sein. Das Filtermodul kann mit dem Pumpengehäuse verbunden, insbesondere verschraubt, sein. Das Filtermodul, insbesondere der Filter, kann in oder an dem Pumpengehäuse ausgebildet sein. Vorzugsweise können das Pumpenmodul und das Filtermodul zusammen ein Pumpenfiltermodul bilden. Insbesondere kann das Filtermodul auf der dem Antrieb abgewandten Seite der ersten Pumpe und/oder der zweiten Pumpe des Pumpenmoduls ausgebildet sein. Das Filtermodul kann ein Ölfilter, insbesondere ein Ölfilter eines Kfz, sein. Das Filtermodul kann ein Tiefenfilter sein.

Das Filtermodul kann dazu ausgelegt sein, 20% der Partikel einer Größe > 6 µm zurückzuhalten. Das heißt, das Filtermodul kann bei einer Partikelgröße > 6 µm einen Abscheidegrad von 20% aufweisen. Insbesondere kann das Filtermodul dazu ausgelegt sein, 65% der Partikel einer Größe > 14 µm zurückzuhalten. Das heißt, das Filtermodul kann bei einer Partikelgröße > 14 µm einen Abscheidegrad von 65% aufweisen. Das Filtermodul ist vorzugsweise der Hauptfilter des Fluidfördersystems.

Das Filtermodul kann auf der Hochdruckseite oder der Niederdruckseite der ersten Pumpe ausgebildet sein. Insbesondere kann das Filtermodul stromaufwärts oder stromab der ersten Arbeitsflut ausgebildet sein. Das Filtermodul kann stromab der ersten Arbeitsflut, insbesondere auf der ersten Hochdruckseite, ausgebildet sein. Insbesondere kann das Filtermodul stromab des ersten Auslasses des Pumpenmoduls ausgebildet sein. Das Filtermodul kann in der ersten Druckleitung ausgebildet sein, bzw. wird durch die erste Druckleitung mit Fluid versorgt. Insbesondere kann das Fluid durch die erste Pumpe durch das Filtermodul gefördert werden.

Alternativ kann das Filtermodul stromaufwärts der ersten Arbeitsflut, insbesondere auf der ersten Niederdruckseite, ausgebildet sein. Insbesondere kann das Filtermodul stromaufwärts des ersten Einlasses des Pumpenmoduls ausgebildet sein. Das Filtermodul kann das Fluid des Versorgungsstroms filtern. Insbesondere kann das Filtermodul das Fluid stromaufwärts des Maschinenaggregats filtern. Auf diese Weise kann das Maschinenaggregat vor Abnutzung durch Schmutzpartikel geschützt werden.

Das Filtermodul kann in alternativen Ausführungen stromab des Maschinenaggregats ausgebildet sein, insbesondere kann das Filtermodul das Fluid des Versorgungsstroms stromab des Maschinenaggregats filtern. Auf diese Weise kann beispielsweise durch das Maschinenaggregat verunreinigtes Fluid gefiltert werden, bevor es in das Reservoir zurückströmt.

Insbesondere kann das Filtermodul stromab oder stromauf des Maschinenaggregats ausgebildet sein und das Fluid des Versorgungsstroms filtern. Teilt sich der Versorgungsstrom stromab des Reservoirs in Versorgungsteilströme, beispielsweise in einen ersten Versorgungsteilstrom und einen zweiten Versorgungsteilstrom, kann das Filtermodul das Fluid des Versorgungstroms vor der Teilung filtern. Teilt sich der Versorgungsstrom stromab des Reservoirs in Versorgungsteilströme, beispielsweise in einen ersten Versorgungsteilstrom und einen zweiten Versorgungsteilstrom, kann das Filtermodul alternativ das Fluid eines Versorgungsteilstroms filtern. Teilt sich der Versorgungsstrom stromab des Reservoirs in Versorgungsteilströme, beispielsweise in einen ersten Versorgungsteilstrom und einen zweiten Versorgungsteilstrom, kann das Filtermodul beispielsweise das Fluid des ersten Versorgungsteilstroms oder des zweiten Versorgungsteilstroms filtern. Insbesondere kann das Filtermodul das Fluid des ersten Versorgungsteilstroms und/oder des zweiten Versorgungsteilstroms über den Teilstrom filtern, bevor das Fluid in das Reservoir zurückströmt.

Das Filtermodul kann auf der Hochdruckseite oder der Niederdruckseite der zweiten Pumpe ausgebildet sein. So kann das Filtermodul beispielsweise stromaufwärts oder stromab der zweiten Pumpe, insbesondere der zweiten Arbeitsflut, ausgebildet sein. Insbesondere kann das Filtermodul stromab der zweiten Arbeitsflut, insbesondere auf der zweiten Hochdruckseite, ausgebildet sein. Alternativ kann das Filtermodul stromaufwärts der zweiten Arbeitsflut, insbesondere auf der zweiten Niederdruckseite, ausgebildet sein. Die zweite Arbeitsflut fördert vorzugsweise das Fluid des Teilstroms. Das Fluid des Teilstroms kann ganz oder teilweise dem Fluid des zweiten Versorgungsteilstroms oder des ersten Versorgungsteilstroms entsprechen, bevor es in das Reservoir zurückströmt. Alternativ kann das Fluid des Teilstroms einem Teil des Fluids des ersten Versorgungsteilstroms und des zweiten Versorgungsteilstroms entsprechen. Insbesondere kann das Fluid durch die zweite Pumpe durch das Filtermodul gefördert werden.

Das Filtermodul kann beispielsweise das Fluid des Teilstroms filtern. Filtert das Filtermodul das Fluid des Teilstroms, ist das Filtermodul vorzugsweise stromaufwärts der zweiten Pumpe ausgebildet. Da das Fluid des Versorgungsstroms, insbesondere des ersten Versorgungsteilstroms, und das Fluid des Teilstroms, insbesondere das Fluid des zweiten Versorgungsteilstroms, in dem Reservoir, insbesondere in dem Hauptsumpf, aufeinandertreffen bzw. miteinander vermischt werden, wird das Fluid des gesamten Fluidfördersystems mit der Zeit gefiltert.

Teilt sich der Versorgungsstrom stromabwärts des Reservoirs in Versorgungsteilströme und filtert das Filtermodul das Fluid des Teilstroms, kann stromaufwärts der Teilung des Versorgungsstroms im Versorgungsstrom kein Filtermodul oder ein Hilfsfiltermodul ausgebildet sein. Ist stromaufwärts der Teilung des Versorgungsstroms eine Hilfsfiltermodul ausgebildet, so kann das Hilfsfiltermodul insbesondere größere und/oder weniger Partikel als das Filtermodul des Teilstroms aus dem Fluid abscheiden. Das bedeutet, vorzugsweise ist die Abscheideleistung des Hilfsfiltermoduls schlechter als die Abscheideleistung des Filtermoduls im Teilstrom. Insbesondere kann das Hilfsfiltermodul dazu ausgelegt sein, weniger als 20% der Partikel einer Größe > 6 µm zurückzuhalten. Insbesondere kann das Hilfsfiltermodul dazu ausgelegt sein, weniger als 65% der Partikel einer Größe > 14 µm zurückzuhalten.

Die Anordnung des Filtermoduls in dem Teilstrom, insbesondere in der zweiten Saugleitung, hat den Vorteil, dass die zweite Pumpe, welche insbesondere das Fluid des Teilstroms fördert, das Fluid durch das Filtermodul, insbesondere durch den Filter, fördert. Auf diese Weise kann der Druckabfall in dem Versorgungsstrom verringert werden. Dies hat den Vorteil, dass die erste Pumpe weniger Leistung aufbringen muss. Auf diese Weise kann eine Leistungsersparnis im gesamten Fluidfördersystem erreicht werden.

Ist das Filtermodul in dem Teilstrom ausgebildet, kann beispielsweise auf ein Bypassventil verzichtet werden. Das Bypassventil dient der Sicherstellung, dass das Maschinenaggregat auch bei einem beispielsweise verstopften Filtermodul mit Fluid versorgt wird. Durch die Anordnung des Filtermoduls in dem Teilstrom ist die Versorgung des Maschinenaggregats mit Fluid durch den Versorgungsstrom gewährleistet. Durch den Verzicht auf das Bypassventil oder eine anderweitige Sicherung kann das Fluidfördersystem beispielsweise kostengünstiger hergestellt werden.

Das Fluidfördersystem kann wenigstens einen Wärmetauscher umfassen. Der Wärmetauscher kann zusätzlich oder alternativ zu dem Filtermodul ausgebildet sein. Der Wärmetauscher kann separat von dem Pumpengehäuse und/oder dem Gehäuse ausgebildet sein. Der Wärmetauscher kann an oder in dem Gehäuse ausgebildet sein. Alternativ kann der Wärmetauscher an oder in dem Pumpengehäuse ausgebildet sein. Der Wärmetauscher kann mit dem Gehäuse verbunden, insbesondere verschraubt sein. Vorzugsweise können der Wärmetauscher und das Gehäuse zusammen ein Kühlwannenmodul bilden.

Der Wärmetauscher kann fluidisch mit dem Reservoir verbunden sein. Insbesondere kann der Wärmetauscher mit dem Hauptsumpf und/oder dem Nebensumpf fluidisch verbunden sein. In bevorzugten Ausführungen ist der Wärmetauscher fluidisch mit dem Hauptsumpf verbunden. In dem Wärmetauscher wird thermische Energie zwischen dem Fluid, welches zur Versorgung des Maschinenaggregats vorgesehen ist, und dem Fluid des Wärmetauschers, insbesondere Kühlmittel, übertragen. Der Wärmetauscher kann der Kühlung des Fluids zur Versorgung des Maschinenaggregats, insbesondere Öl zur Kühlung und/oder Schmierung des Maschinenaggregats, dienen.

Der Wärmetauscher kann auf der Hochdruckseite oder der Niederdruckseite der ersten Pumpe ausgebildet sein. Insbesondere kann der Wärmetauscher stromaufwärts oder stromab der ersten Arbeitsflut ausgebildet sein. Der Wärmetauscher kann stromab der ersten Arbeitsflut, insbesondere auf der ersten Hochdruckseite, ausgebildet sein. Insbesondere kann der Wärmetauscher stromab des ersten Auslasses des Pumpenmoduls ausgebildet sein.

Alternativ kann der Wärmetauscher stromaufwärts der ersten Arbeitsflut, insbesondere auf der ersten Niederdruckseite, ausgebildet sein. Insbesondere kann der Wärmetauscher stromaufwärts des ersten Einlasses des Pumpenmoduls ausgebildet sein. Der Wärmetauscher kann das Fluid des Versorgungsstroms kühlen. Insbesondere kann der Wärmetauscher das Fluid stromaufwärts des Maschinenaggregats kühlen. Auf diese Weise kann das Maschinenaggregat beispielsweise gekühlt werden.

In alternativen Ausführungen kann der Wärmetauscher stromaufwärts oder stromab der zweiten Arbeitsflut ausgebildet sein. Insbesondere kann der Wärmetauscher stromab der zweiten Arbeitsflut, insbesondere auf der zweiten Hochdruckseite, ausgebildet sein.

Alternativ kann der Wärmetauscher stromaufwärts der zweiten Arbeitsflut, insbesondere auf der zweiten Niederdruckseite, ausgebildet sein. Der Wärmetauscher kann das Fluid des Teilstroms kühlen. Da das Fluid des Versorgungsstroms, insbesondere das Fluid des ersten Versorgungsteilstroms, und das Fluid des Teilstroms, insbesondere das Fluid des zweiten Versorgungteilstroms, in dem Reservoir, insbesondere in dem Hauptsumpf, aufeinandertreffen bzw. miteinander vermischt werden, wird das Fluid des gesamten Fluidfördersystems mit der Zeit gekühlt.

Umfasst das Fluidfördersystem neben einem Wärmetauscher auch ein Filtermodul, so können sowohl das Filtermodul als auch der Wärmetauscher in dem Versorgungsstrom oder in dem Teilstrom ausgebildet sein. Insbesondere kann der Wärmetauscher und/oder das Filtermodul in dem Versorgungsstrom ausgebildet sein. Auch kann der Wärmetauscher und/oder das Filtermodul in dem Teilstrom ausgebildet sein.

In einer Ausführungsform können der Wärmetauscher und das Filtermodul in dem Versorgungsstrom ausgebildet sein. Dabei kann das Filtermodul und/oder der Wärmetauscher stromab des Pumpenmoduls, insbesondere stromab der ersten Pumpe, ausgebildet sein. Auch kann das Filtermodul und/oder der Wärmetauscher stromaufwärts des Pumpenmoduls, insbesondere stromaufwärts der ersten Pumpe, ausgebildet sein. Auch kann das Filtermodul oder der Wärmetauscher stromaufwärts des Pumpenmoduls, insbesondere stromaufwärts der ersten Pumpe, ausgebildet sein, während das andere Teil aus Wärmetauscher oder Filtermodul stromab des Pumpenmoduls, insbesondere stromab der ersten Pumpe, ausgebildet ist. Sind der Wärmetauscher und das Filtermodul beide in dem gleichen Strom ausgebildet, ist kann das Filtermodul stromaufwärts des Wärmetauschers ausgebildet sein. Alternativ kann der Wärmetauscher stromaufwärts des Filtermoduls ausgebildet sein.

In einer alternativen Ausführungsform können der Wärmetauscher und das Filtermodul in dem Teilstrom ausgebildet sein. Das Filtermodul und/oder der Wärmetauscher können stromab des Pumpenmoduls, insbesondere stromab der zweiten Pumpe, ausgebildet sein. Auch kann das Filtermodul und/oder der Wärmetauscher stromaufwärts des Pumpenmoduls, insbesondere stromaufwärts der zweiten Pumpe, ausgebildet sein. Bevorzugt ist das Filtermodul stromaufwärts des Wärmetauschers ausgebildet. Alternativ kann der Wärmetauscher stromaufwärts des Filtermoduls ausgebildet sein. Auch kann das Filtermodul oder der Wärmetauscher stromaufwärts des Pumpenmoduls, insbesondere stromaufwärts der zweiten Pumpe, ausgebildet sein, während das andere Teil aus Wärmetauscher oder Filtermodul stromab des Pumpenmoduls, insbesondere stromab der zweiten Pumpe, ausgebildet ist.

In einer weiteren Ausführungsform kann der Wärmetauscher oder das Filtermodul in dem Teilstrom ausgebildet sein, während das andere Teil aus Wärmetauscher oder Filtermodul in dem Versorgungsstrom ausgebildet ist. Der Wärmetauscher und/oder das Filtermodul können stromaufwärts oder stromab der ersten Pumpe und/oder der zweiten Pumpe ausgebildet sein. Insbesondere kann das Filtermodul in dem Teilstrom stromab oder stromaufwärts der zweiten Pumpe ausgebildet sein, während der Wärmetauscher in dem Versorgungsstrom stromab oder stromaufwärts der ersten Pumpe ausgebildet sein kann. Alternativ kann das Filtermodul in dem Versorgungsstrom stromab oder stromaufwärts der ersten Pumpe ausgebildet sein, während der Wärmetauscher in dem Teilstrom stromab oder stromaufwärts der ersten Pumpe ausgebildet sein kann.

Nachfolgend soll die Erfindung anhand von Ausführungsbeispielen beschrieben werden. Die in den Ausführungsbeispielen offenbarten Merkmale bilden den Gegenstand der Ansprüche und der oben beschriebenen Ausführungsformen vorteilhaft weiter. Die Figuren zeigen:
- Figur 1:: isometrische Ansicht eines Fluidfördersystems,
- Figur 2:: isometrische Ansicht eines ersten Gehäuseteils,
- Figur 3:: isometrische Ansicht eines zweiten Gehäuseteils,
- Figur 4:: hydraulischer Schaltplan eines ersten Ausführungsbeispiels,
- Figur 5:: hydraulischer Schaltplan eines zweiten Ausführungsbeispiels,
- Figur 6:: hydraulischer Schaltplan eines dritten Ausführungsbeispiels.

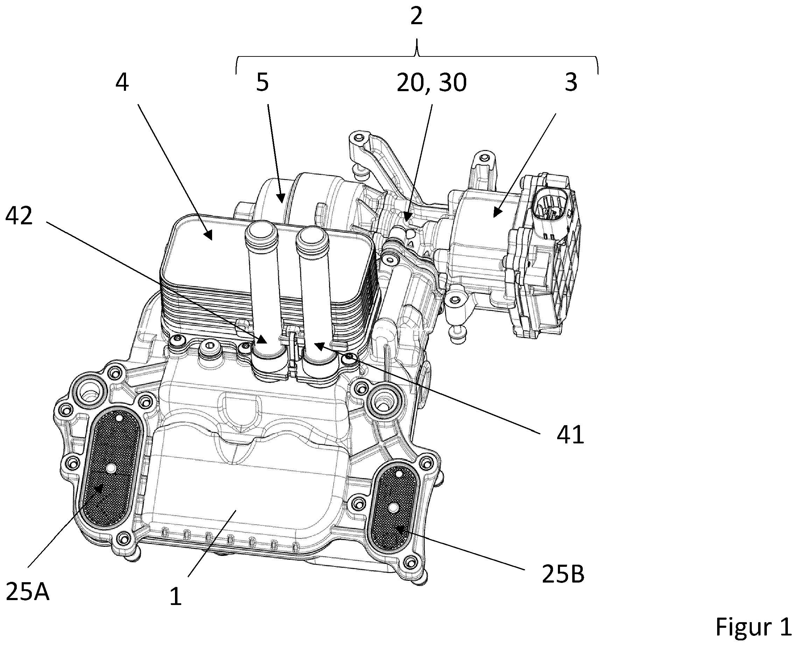

Figur 1 zeigt eine isometrische Ansicht eines Fluidfördersystems zur Versorgung zumindest eines Maschinenaggregats A mit Fluid. Das zumindest eine Maschinenaggregat A, welches nicht mehr dargestellt ist, kann ein Motor und/oder ein Getriebe eines Kraftfahrzeugs sein. Insbesondere kann es sich bei dem Maschinenaggregat A um eine E-Maschine eines Kraftfahrzeugs handeln, welche einen Elektromotor zum Antreiben des Kraftfahrzeuges und ein Getriebe zum Untersetzen der Drehzahl des Elektromotors umfasst. Bei dem Fluidfördersystem kann es sich um ein Fluidfördersystem zur Versorgung eines Motors und/oder eines Getriebes eines Kraftfahrzeugs mit Fluid, insbesondere mit Öl zur Schmierung und/oder Kühlung, handeln.

Das Fluidfördersystem gemäß Figur 1 umfasst ein Pumpenmodul 20, 30, einen Antrieb 3, ein Filtermodul 5 und einen Wärmetauscher 4. Die Anordnung des Antriebs 3, des Filtermoduls 5 und des Wärmetauschers 4 sind beispielhaft und können an anderer Stelle in dem Fluidfördersystem angeordnet sein oder ganz weggelassen werden. Wie anhand von Figur 1 anhand von Anschlüssen zu erkennen ist, wird der Antrieb 3 bevorzugt durch einen Elektromotor gebildet. Der Antrieb 3, das Pumpenmodul 20, 30 und das Filtermodul 5 bilden zusammen ein Pumpenfiltermodul. Der Wärmetauscher 4 und das Gehäuse 1 bilden zusammen ein Kühlwannenmodul. Das Pumpenfiltermodul und das Kühlwannenmodul können jeweils eine Einheit bilden.

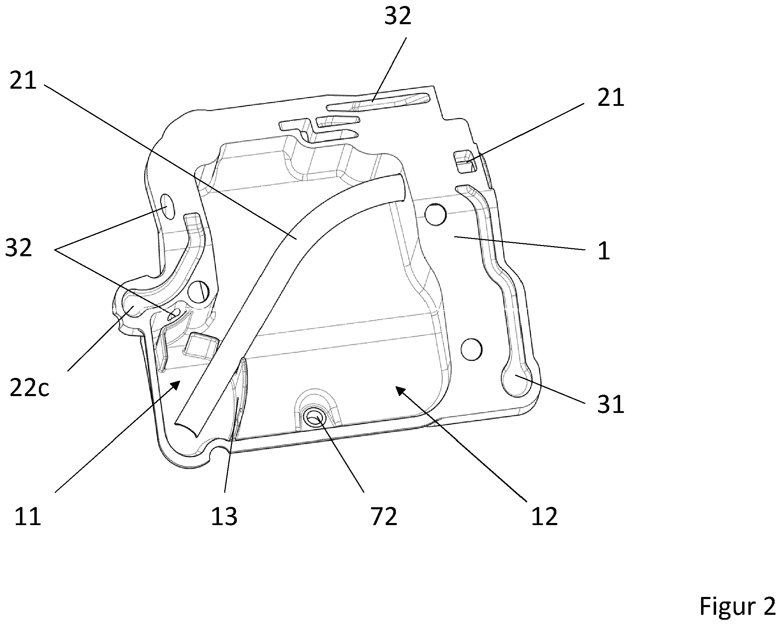

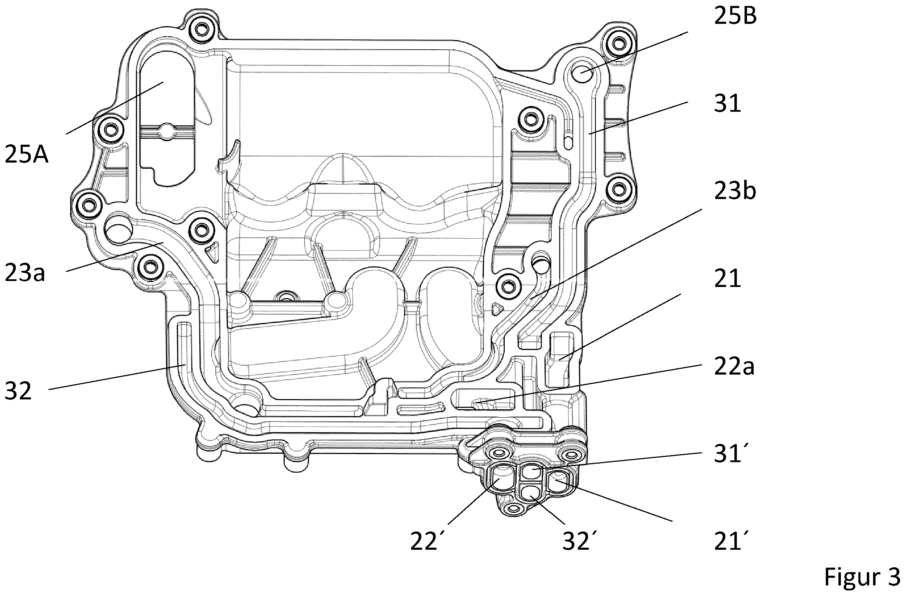

Das Fluidfördersystem gemäß Figur 1 umfasst ein Gehäuse 1 mit einem Reservoir 11, 12 zur Bevorratung des Fluids. Das Gehäuse umfasst ein erstes Gehäuseteil, insbesondere einen Gehäusetopf, wie er in Figur 2 dargestellt ist, und ein zweites Gehäuseteil, insbesondere einen Gehäusedeckel, wie er in Figur 3 dargestellt ist. Das zweite Gehäuseteil umfasst eine erste Rücklauföffnung 25A und eine zweite Rücklauföffnung 25B. Die erste Rücklauföffnung 25A und die zweite Rücklauföffnung 25B sind mit dem zu versorgenden Maschinenaggregat A verbunden. Insbesondere kann die erste Rücklauföffnung 25A über einen ersten Rücklauf 25a mit einem Maschinenaggregat A und die zweite Rücklauföffnung 25B über einen zweiten Rücklauf 25b mit einem weiteren Maschinenaggregat A verbunden werden.

Über die erste Rücklauföffnung 25A und die zweite Rücklauföffnung 25B kann das Fluid von dem entsprechenden Maschinenaggregat A in das Gehäuse 1 zurückströmen. Über die erste Rücklauföffnung 25A kann das Fluid von dem Maschinenaggregat A, insbesondere von dem Getriebe einer E-Maschine, in das Reservoir 11, 12 zurückströmen. Über die zweite Rücklauföffnung 25B kann das Fluid von dem Maschinenaggregat A, insbesondere von einem Antrieb einer E-Maschine, in das Gehäuse 1 zurückströmen. Die erste Rücklauföffnung 25A und/oder die zweite Rücklauföffnung 25B können/kann alternativ auch in dem ersten Gehäuseteil ausgebildet sein.

Das Pumpenmodul 20, 30 umfasst eine nicht näher dargestellte erste Pumpe 20 und eine nicht näher dargestellte zweite Pumpe 30. Die erste Pumpe 20 und die zweite Pumpe 30 sind in einem gemeinsamen Pumpengehäuse 2 angeordnet. Die erste Pumpe 20 und/oder die zweite Pumpe 30 sind/ist vorzugsweise eine Rotationspumpe, insbesondere eine Innenzahnradpumpe. Die Erfindung ist jedoch nicht auf die Bauweise der Pumpe beschränkt und kann beispielsweise auch mit Flügelzellenpumpen oder dergleichen ausgebildet sein. Auch können die erste Pumpe 20 und die zweite Pumpe 30 durch unterschiedliche Pumpen gebildet sein.

Im vorliegenden Ausführungsbeispiel der Figur 1 ist der Wärmetauscher 4 zusätzlich zu dem Filtermodul 5 ausgebildet. Der Wärmetauscher 4 ist separat von dem Pumpengehäuse 2 und dem Gehäuse 1 ausgebildet. Der Wärmetauscher 4 ist an dem Gehäuse 1 ausgebildet und mit dem Gehäuse 1 verbunden, insbesondere verschraubt. Der Wärmetauscher 4 umfasst eine erste Kühlmittelleitung 41, über welche das Kühlmittel in den Wärmetauscher 4 strömen kann, und eine zweite Kühlmittelleitung 42, über welche das Kühlmittel aus dem Wärmetauscher 4 herausströmen kann. In alternativen Ausführungen kann der Wärmetauscher 4 auch als Luftkühler ausgebildet sein.

Das Filtermodul 5 ist mit dem Pumpengehäuse 2 verbunden bzw. bilden das Gehäuse des Filtermoduls 5 und das Gehäuse des Pumpenmoduls 20, 30 das Pumpengehäuse 2. D.h., das Pumpengehäuse 2 kann aus mehreren Gehäuseteilen gebildet sein, wobei ein Gehäuseteil durch das Gehäuse des Filtermoduls 5 gebildet sein kann. Das Filtermodul 5 umfasst einen nicht näher gezeigten Filter, welcher das Fluid beim Durchströmen filtert.

In dem Ausführungsbeispiel der Figur 1 ist neben dem Filtermodul 5 auch der Antrieb 3 mit dem Pumpengehäuse 2 verbunden bzw. bilden das Gehäuse des Antriebs 3 und das Gehäuse des Pumpenmoduls 20,30 zusammen mit dem Gehäuse des Filtermoduls 5 das Pumpengehäuse 2. Der Antrieb 3 ist auf der dem Filtermodul 5 abgewandten Seite des Pumpenmoduls 20, 30 angeordnet. Das bedeutet, das Pumpenmodul 20, 30 ist zwischen dem Filtermodul 5 und dem Antrieb 3 ausgebildet.

Die Figuren 2 und 3 zeigen das Gehäuse 1 der Figur 1, insbesondere das erste Gehäuseteil und das zweite Gehäuseteil, in einer isometrischen Ansicht. Das Reservoir 11, 12 kann von dem ersten Gehäuseteil und dem zweiten Gehäuseteil gebildet sein, insbesondere umschlossen. Das erste Gehäuseteil ist in Form eines Gehäusetopfs ausgebildet. Das erste Gehäuseteil hat insbesondere die Form einer Ölwanne, insbesondere einer flachen Ölwanne. Das zweite Gehäuseteil ist in Form eines Gehäusedeckels ausgebildet, welches mit dem ersten Gehäuseteil verbunden werden kann.

Das erste Gehäuseteil und das zweite Gehäuseteil können stoffschlüssig miteinander verbunden sein. Insbesondere können das erste Gehäuseteil und das zweite Gehäuseteil an ihren einander zugewandten Stirnflächen miteinander verklebt oder verschweißt sein. Alternativ oder zusätzlich können das erste Gehäuseteil und das zweite Gehäuseteil miteinander verschraubt oder anderweitig kraft- und/oder formschlüssig miteinander verbunden sein.

Das Reservoir 11, 12 ist zwischen dem ersten Gehäuseteil und dem zweiten Gehäuseteil ausgebildet. Insbesondere wird das Reservoir 11, 12 von dem ersten Gehäuseteil und dem zweiten Gehäuseteil umschlossen. In dem ersten Gehäuseteil ist ein Schwallblech 13 ausgebildet, welches das Reservoir 11, 12 in einen Hauptsumpf 11 und einen Nebensumpf 12 unterteilt. Der Hauptsumpf 11 und der Nebensumpf 12 sind über das Schwallblech 13 fluidisch miteinander verbunden. Insbesondere kann das Fluid von dem Hauptsumpf 11 unter Umgehung des Schwallblechs 13 in den Nebensumpf 12 fließen und umgekehrt. In dem Nebensumpf 12, insbesondere am Boden des Nebensumpfes 12, ist ein Ablass 72 ausgebildet, über welchen das Fluid aus dem Reservoir 11, 12 beispielsweise für einen Fluidwechsel abgelassen werden kann. Der Ablass 72 kann beispielsweise durch eine Ablassschraube 70 verschlossen sein.

Das Gehäuse 1, insbesondere das zweite Gehäuseteil der Figur 3, umfasst einen ersten Sauganschluss 21' und einen zweiten Sauganschluss 31'. Des Weiteren umfasst das Gehäuse 1, insbesondere das zweite Gehäuseteil, einen ersten Druckanschluss 22' und einen zweiten Druckanschluss 32'. Der erste Sauganschluss 21' ist vorzugsweise über eine erste Saugleitung 21 mit dem Reservoir 11, 12, insbesondere dem Hauptsumpf 11, verbunden. Der zweite Sauganschluss 31' ist vorzugsweise über eine zweite Saugleitung 31 mit dem Gehäuse 1 abseits des Reservoirs 11, 12 verbunden. Insbesondere ist der zweite Sauganschluss 31' über die zweite Saugleitung 31 fluidisch mit der zweiten Rücklauföffnung 25B verbunden. Die zweite Saugleitung 31 mündet mit ihrem stromaufwärtigen Ende auf der dem Maschinenaggregat A abgewandten Seite der zweiten Rücklauföffnung 25B.

Der erste Druckanschluss 22' kann über eine erste Druckleitung 22 mit dem Maschinenaggregat A verbunden sein. Die erste Druckleitung 22 kann verschiedene Abschnitte aufweisen, wobei die einzelnen Abschnitte in oder an dem Gehäuse 1 ausgebildet sein können. Insbesondere kann sich die erste Druckleitung 22 stromab des ersten Druckanschlusses 22' in eine erste Versorgungsleitung 23a und eine zweite Versorgungsleitung 23b teilen. Die erste Versorgungsleistung 23a und die zweite Versorgungsleitung 23b können als Abschnitte der ersten Druckleitung 22 betrachtet werden.

Im vorliegenden Ausführungsbeispiel der Figur 3 ist in dem Gehäuse 1 ein erster Abschnitt 22a der ersten Druckleitung 22 ausgebildet, welcher von dem ersten Druckanschluss 22' zu dem Wärmetauscher 4 führt. Nach dem Durchströmen des Wärmetauschers 4 kann das Fluid über die erste Versorgungsleitung 23a und die zweite Versorgungsleitung 23b durch das Gehäuse 1 in Richtung des zumindest einen Maschinenaggregats A strömen. Der zweite Druckanschluss 32' kann über eine zweite Druckleitung 32 fluidisch mit dem Reservoir 11, 12, insbesondere mit dem Hauptsumpf 11, verbunden sein.

Wie insbesondere aus Figur 3 ersichtlich wird, mündet die zweite Saugleitung 31 mit ihrem stromaufwärtigen Ende benachbart zu der zweiten Rücklauföffnung 25B. Insbesondere mündet das stromaufwärtige Ende der zweiten Saugleitung 31 unterhalb der zweiten Rücklauföffnung 25B in das Gehäuse 1.

Der erste Sauganschluss 21' ist über eine erste Saugleitung 21 mit dem Reservoir 11, 12, insbesondere mit dem Hauptsumpf 11 verbunden. Die erste Saugleitung 21 wird, wie beispielsweise in Figur 2 gezeigt, nicht oder größtenteils nicht von dem ersten Gehäuseteil und/oder dem zweiten Gehäuseteil gebildet. Die erste Saugleitung 21 wird zu einem Teil durch einen Röhrenabschnitt gebildet. Der Röhrenabschnitt der ersten Saugleitung 21 ist separat von dem ersten Gehäuseteil und dem zweiten Gehäuseteil gebildet. Der Röhrenabschnitt der ersten Saugleitung 21 ist zwischen dem ersten Gehäuseteil und dem zweiten Gehäuseteil angeordnet. Der Röhrenabschnitt der ersten Saugleitung 21 mündet mit seinem stromaufwärtigen Ende in den Hauptsumpf 11 und mit seinem stromabwärtigen Ende in das erste Gehäuseteil. Alternativ kann der Röhrenabschnitt der ersten Saugleitung 21 mit seinem stromaufwärtigen Ende in den Hauptsumpf 11 und mit seinem stromabwärtigen Ende in das zweite Gehäuseteil münden. Das stromaufwärtige Ende der ersten Saugleitung 21 und insbesondere der Röhrenabschnitt der ersten Saugleitung 21 bildet eine Absaugstelle, über welche das Fluid aus dem Hauptsumpf 11 abgesaugt werden kann.

Der nicht von dem Röhrenabschnitt gebildete Teil der ersten Saugleitung 21 wird durch einen Kanal im ersten Gehäuseteil gebildet, in welchen der Röhrenabschnitt mündet. Der Kanal im ersten Gehäuseteil ist an seinem stromaufwärtigen Ende mit dem Röhrenabschnitt verbunden und mündet mit seinem stromabwärtigen Ende an der Stirnfläche des ersten Gehäuseteils. Des Weiteren wird ein Teil der ersten Saugleitung 21 durch einen Kanal im zweiten Gehäuseteil gebildet, welcher an seinem stromaufwärtigen Ende an der Stirnfläche des zweiten Gehäuseteils mündet und dessen stromabwärtiges Ende den ersten Sauganschluss 21' bildet.

Wie in den Figuren 2 und 3 gezeigt, kann die erste Saugleitung 21 zu einem Großteil durch einen Röhrenabschnitt gebildet sein, welcher separat von dem ersten Gehäuseteil und dem zweiten Gehäuseteil gebildet ist. Einzelne Abschnitte der ersten Saugleitung 21 können auch durch Kanäle in dem ersten Gehäuseteil und/oder dem zweiten Gehäuseteil gebildet sein.

Die erste Druckleitung 22, insbesondere die einzelnen Abschnitte 22a, 22b, 23a, 23b der ersten Druckleitung 22, kann durch das erste Gehäuseteil und/oder das zweite Gehäuseteil gebildet sein. Beispielsweise kann das erste Gehäuseteil und/oder das zweite Gehäuseteil Teile, insbesondere Abschnitte, der ersten Druckleitung 22 ausbilden. So können das erste Gehäuseteil und/oder das zweite Gehäuseteil beispielsweise jeweils Kanalabschnitte aufweisen, welche in Richtung der Stirnfläche des jeweiligen Gehäuseteils offen sind und im gefügten Zustand der beiden Gehäuseteile die erste Druckleitung 22 oder Abschnitte 22a, 22b, 23a, 23b der ersten Druckleitung 22 bilden. Dabei können jeweils zwei Kanalabschnitte einander überlappen oder ein Kanalabschnitt durch das andere Gehäuseteil verschlossen werden. Auch kann die erste Druckleitung 22 beispielsweise durch Kanäle in oder durch das erste Gehäuseteil und/oder das zweite Gehäuseteil gebildet sein.

Im Ausführungsbeispiel der Figuren 2 und 3 wird der erste Abschnitt 22a der Druckleitung 22 durch einen Kanal im zweiten Gehäuseteil gebildet. Der Kanal bildet an seinem stromabwärtigen Ende den ersten Druckanschluss 22' und mündet mit seinem stromabwärtigen Ende an der Stirnfläche des zweiten Gehäuseteils. Die erste Versorgungsleitung bzw. der dritte Abschnitt 23a der Druckleitung 22 wird durch einen Kanalabschnitt in dem ersten Gehäuseteil, welcher an der Stirnfläche des ersten Gehäuseteils offen ist, und einen Kanalabschnitt in dem zweiten Gehäuseteil, welcher an der Stirnfläche des zweiten Gehäuseteils offen ist, gebildet. Die beiden Kanalabschnitte überlappen einander dabei im gefügten Zustand der beiden Gehäuseteile. Die zweite Versorgungsleitung bzw. der vierte Abschnitt 23b der Druckleitung 22 wird durch einen Kanalabschnitt in dem zweiten Gehäuseteil gebildet, welcher an der Stirnfläche des zweiten Gehäuseteils offen ist und im gefügten Zustand der beiden Gehäuseteile durch das erste Gehäuseteil verschlossen wird. Der zweite Abschnitt 22a der Druckleitung 22 ist in den Figuren 1-3 nicht dargestellt und erstreckt sich innerhalb des Pumpengehäuses 2 von der ersten Pumpe 20, insbesondere von dem Auslass der ersten Pumpe 20, über das Filtermodul 5 zum ersten Auslass des Pumpenmoduls 20, 30.

Die zweite Saugleitung 31 kann durch das erste Gehäuseteil und/oder das zweite Gehäuseteil gebildet sein. Beispielsweise kann das erste Gehäuseteil und/oder das zweite Gehäuseteil Teile, insbesondere Abschnitte, der zweiten Saugleitung 31 ausbilden. So können das erste Gehäuseteil und/oder das zweite Gehäuseteil beispielsweise jeweils Kanalabschnitte aufweisen, welche in Richtung der Stirnfläche des jeweiligen Gehäuseteils offen sind und im gefügten Zustand der beiden Gehäuseteile die zweite Saugleitung 31 oder Abschnitte der zweiten Saugleitung 31 bilden. Dabei können jeweils zwei Kanalabschnitte einander überlappen oder ein Kanalabschnitt durch das andere Gehäuseteil verschlossen werden. Auch kann die zweite Saugleitung 31 beispielsweise durch Kanäle in oder durch das erste Gehäuseteil und/oder das zweite Gehäuseteil gebildet sein.

In dem Ausführungsbeispiel der Figuren 2 und 3 wird die zweite Saugleitung 31 durch einen Kanalabschnitt im ersten Gehäuseteil, welcher in Richtung der Stirnfläche des ersten Gehäuseteils offen ist, und einen weiteren Kanalabschnitt im zweiten Gehäuseteil, welcher in Richtung der Stirnfläche des zweiten Gehäuseteils offen ist, gebildet. Die beiden Kanalabschnitte überlappen einander im gefügten Zustand des Gehäuses 1 und bilden auf diese Weise die zweite Saugleitung 31. Des Weiteren erstreckt sich die zweite Saugleitung 31 teilweise als Kanal durch das zweite Gehäuseteil, wobei das stromabwärtige Ende des Kanals den zweiten Sauganschluss 31' bildet.

Die zweite Druckleitung 32 kann durch das erste Gehäuseteil und/oder das zweite Gehäuseteil gebildet sein. Beispielsweise kann das erste Gehäuseteil und/oder das zweite Gehäuseteil Teile, insbesondere Abschnitte, der zweiten Druckleitung 32 ausbilden. So können das erste Gehäuseteil und/oder das zweite Gehäuseteil beispielsweise jeweils Kanalabschnitte aufweisen, welche in Richtung der Stirnfläche des jeweiligen Gehäuseteils offen sind und im gefügten Zustand der beiden Gehäuseteile die zweite Druckleitung 32 oder Abschnitte der zweiten Druckleitung 32 bilden. Dabei können jeweils zwei Kanalabschnitte einander überlappen oder ein Kanalabschnitt durch das andere Gehäuseteil verschlossen werden. Auch kann die zweite Druckleitung 32 beispielsweise durch Kanäle in oder durch das erste Gehäuseteil und/oder das zweite Gehäuseteil gebildet sein.

Im Ausführungsbeispiel der Figuren 2 und 3 ist die zweite Druckleitung 32 durch einen Kanalabschnitt im zweiten Gehäuseteil gebildet, welcher in Richtung der Stirnfläche des zweiten Gehäuseteils offen ist, und einen Kanalabschnitt im ersten Gehäuseteil, welcher in Richtung der Stirnfläche des ersten Gehäuseteils offen ist. Die beiden Kanalabschnitte überlappen einander im gefügten Zustand der Gehäuseteile. Des Weiteren wird die zweite Druckleitung 32 durch einen Kanal durch das erste Gehäuseteil gebildet, welcher am stromaufwärtigen Ende in der Stirnfläche des ersten Gehäuseteils und am stromabwärtigen Ende im Reservoir 11, 12, insbesondere im Hauptsumpf 11, mündet. Die Mündung am stromabwärtigen Ende überlappt dabei mit dem Kanalabschnitt im zweiten Gehäuseteil. Des Weiteren erstreckt sich die zweite Druckleitung 32 teilweise als Kanal durch das zweite Gehäuseteil, wobei das stromaufwärtige Ende des Kanals den zweiten Druckanschluss 32' bildet.

Das Pumpenmodul 20, 30 ist vorzugsweise über den ersten Sauganschluss 21', den zweiten Sauganschluss 31', den ersten Druckanschluss 22' und den zweiten Druckanschluss 32' mit dem Gehäuse 1 verbunden. Insbesondere kann das Pumpenmodul 20, 30 über die erste Saugleitung 21 und den ersten Sauganschluss 21' Fluid aus dem Reservoir 11, 12, insbesondere aus dem Hauptsumpf 11, ansaugen und das Fluid in Richtung des Maschinenaggregats A abgeben. Die erste Pumpe 20 kann über die erste Saugleitung 21 mit dem Reservoir 11,12verbunden sein. Die zweite Pumpe 30 kann über die zweite Saugleitung 31 mit dem Gehäuse 1 verbunden sein.

Zu diesem Zweck umfasst das Pumpenmodul 20, 30 einen nicht näher gezeigten ersten Einlass und einen nicht näher gezeigten zweiten Einlass. Der erste Einlass kann fluidisch mit dem ersten Sauganschluss 21' verbunden sein. Der zweite Einlass kann fluidisch mit dem zweiten Sauganschluss 31' verbunden sein. Der erste Einlass und der erste Sauganschluss 21' können direkt miteinander verbunden sein, sodass der erste Einlass in den ersten Sauganschluss 21' und der erste Sauganschluss 21' in den ersten Einlass mündet. Alternativ können der erste Einlass und der erste Sauganschluss 21' über einen Teil der ersten Saugleitung 21 miteinander verbunden sein. Der zweite Einlass und der zweite Sauganschluss 31' können direkt miteinander verbunden sein, sodass der zweite Einlass in den zweiten Sauganschluss 31' und der zweite Sauganschluss 31' in den zweiten Einlass mündet. Alternativ können der zweite Einlass und der zweite Sauganschluss 31' über einen Teil der zweiten Saugleitung 31 miteinander verbunden sein.

Das Pumpenmodul 20, 30 umfasst vorzugsweise einen nicht näher gezeigten ersten Auslass und einen nicht näher gezeigten zweiten Auslass. Der erste Auslass kann fluidisch mit dem ersten Druckanschluss 22' verbunden sein. Der zweite Auslass kann fluidisch mit dem zweiten Druckanschluss 32' verbunden sein. Der erste Auslass und der erste Druckanschluss 22' können direkt miteinander verbunden sein, sodass der erste Auslass in den ersten Druckanschluss 22' und der erste Druckanschluss 22' in den ersten Auslass mündet. Alternativ können der erste Auslass und der erste Druckanschluss 22' über einen Teil der ersten Druckleitung 22 miteinander verbunden sein. Der zweite Auslass und der zweite Druckanschluss 32' können direkt miteinander verbunden sein, sodass der zweite Auslass in den zweiten Druckanschluss 32' und der zweite Druckanschluss 32' in den zweiten Auslass mündet. Alternativ können der zweite Auslass und der zweite Druckanschluss 32' über einen Teil der zweiten Druckleitung 32 miteinander verbunden sein.

Das Pumpenmodul 20, 30 umfasst vorzugsweise eine sich von dem ersten Einlass bis zu dem zweiten Auslass erstreckende erste Arbeitsflut. Des Weiteren umfasst das Pumpenmodul 20, 30 vorzugsweise eine sich von dem zweiten Einlass bis zu dem zweiten Auslass erstreckende zweite Arbeitsflut. Die erste Arbeitsflut wird vorzugsweise durch die nicht näher dargestellte erste Pumpe 20 gebildet. Die zweite Arbeitsflut wird vorzugsweise durch die nicht näher dargestellte zweite Pumpe 30 gebildet. Die erste Arbeitsflut und die zweite Arbeitsflut sind fluidisch voneinander abgegrenzt.

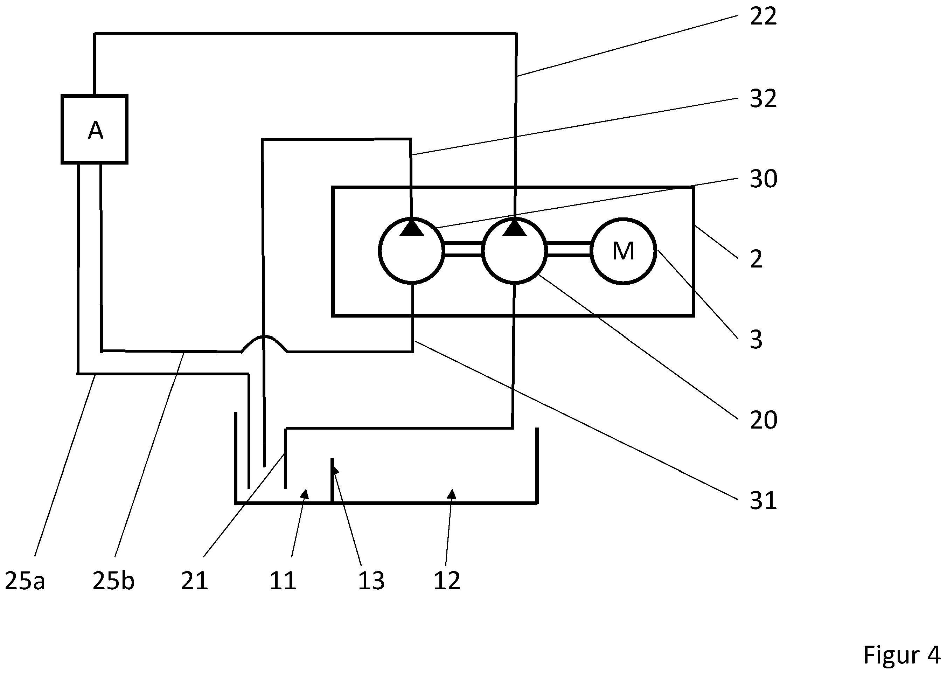

Die Figuren 4, 5 und 6 zeigen hydraulische Schaltpläne verschiedener Ausführungsbeispiele. Die Figur 4 zeigt ein erstes Ausführungsbeispiel eines Fluidfördersystems. Das Fluidfördersystem kann entsprechend dem Fluidfördersystem der Figuren 1-3 ausgebildet sein, sodass die Ausführungen zu den Figuren 1-3, sofern sie nicht im Widerspruch stehen, gleichfalls gelten.

Das Fluidfördersystem umfasst ein Gehäuse 1 mit einem Reservoir 11, 12 für die Bevorratung des Fluids, eine erste Pumpe 20 und eine zweite Pumpe 30, einen Antrieb 3 für die erste Pumpe 20 und die zweite Pumpe 30 sowie ein Maschinenaggregat A. Das Maschinenaggregat A kann durch eine E-Maschine mit einem Motor und einem Getriebe gebildet sein. Die erste Pumpe 20 und die zweite Pumpe 30 bilden vorzugsweise zusammen mit dem Antrieb 3 ein Pumpenmodul 20, 30. Die erste Pumpe 20 und die zweite Pumpe 30 sitzen auf einer gemeinsamen Antriebswelle und werden von dem Antrieb 3 angetrieben. Der Antrieb 3 kann durch einen Elektromotor gebildet sein.

Die zweite Pumpe 30 ist stromab der ersten Pumpe 20 ausgebildet. D.h., die zweite Pumpe 30 saugt auf ihrer Niederdruckseite Fluid von der Hochdruckseite der ersten Pumpe 20 an. Insbesondere ist die zweite Pumpe 30 auch stromab des Maschinenaggregats A ausgebildet. D.h., die zweite Pumpe 30 saugt auf ihrer Niederdruckseite Fluid an, welches von dem Maschinenaggregat A in Richtung des Gehäuses 1 strömt.

Das Pumpenmodul 20, 30 umfasst eine erste Arbeitsflut, welche durch die erste Pumpe 20 gebildet wird, und eine zweite Arbeitsflut, welche durch die zweite Pumpe 30 gebildet wird. Die erste Arbeitsflut und die zweite Arbeitsflut sind fluidisch voneinander getrennt, sodass das Pumpenmodul 20, 30 mehrkreisig, insbesondere zweikreisig, ausgebildet ist. Die erste Arbeitsflut umfasst eine erste Niederdruckseite und eine erste Hochdruckseite. Die zweite Arbeitsflut umfasst eine zweite Niederdruckseite und eine zweite Hochdruckseite. Der Fluidkreislauf der ersten Arbeitsflut bildet den Versorgungsstrom des Fluidfördersystems. Der Fluidkreislauf der zweiten Arbeitsflut bildet den Teilstrom des Fluidfördersystems.

Die erste Arbeitsflut ist auf der ersten Niederdruckseite über die erste Saugleitung 21 mit dem Reservoir 11, 12, insbesondere dem Hauptsumpf 11, verbunden. Auf der ersten Hochdruckseite ist die erste Arbeitsflut über die zweite Druckleitung 22 mit dem Maschinenaggregat A fluidisch verbunden. Auf diese Weise saugt die erste Pumpe 20 Fluid aus dem Reservoir 11,12, insbesondere aus dem Hauptsumpf 11, an und gibt es in Richtung des Maschinenaggregats A ab. Das Fluid kann von dem Maschinenaggregat A über einen ersten Rücklauf 25a und einen zweiten Rücklauf 25b in das Gehäuse 1, insbesondere in das Reservoir 11, 12, zurückströmen.

Im vorliegenden Ausführungsbeispiel kann sich der Versorgungsstrom innerhalb des Maschinenaggregats A in einen ersten Versorgungsteilstrom und einen zweiten Versorgungsteilstrom teilen, wobei der erste Versorgungsteilstrom über den ersten Rücklauf 25a in das Gehäuse 1, insbesondere in das Reservoir 11, 12, und der zweite Versorgungsteilstrom über den zweiten Rücklauf 25b in das Gehäuse 1 zurückströmt. Der erste Versorgungsteilstrom und der zweite Versorgungsteilstrom können entweder verschiedene Stellen des gleichen Maschinenaggregats A oder verschiedene Maschinenaggregate A mit Fluid versorgen. Alternativ kann der Versorgungsstrom auch nur eine Stelle des Maschinenaggregats A mit Fluid versorgen und wird erst beim Zurückströmen in Richtung des Gehäuses 1 geteilt.

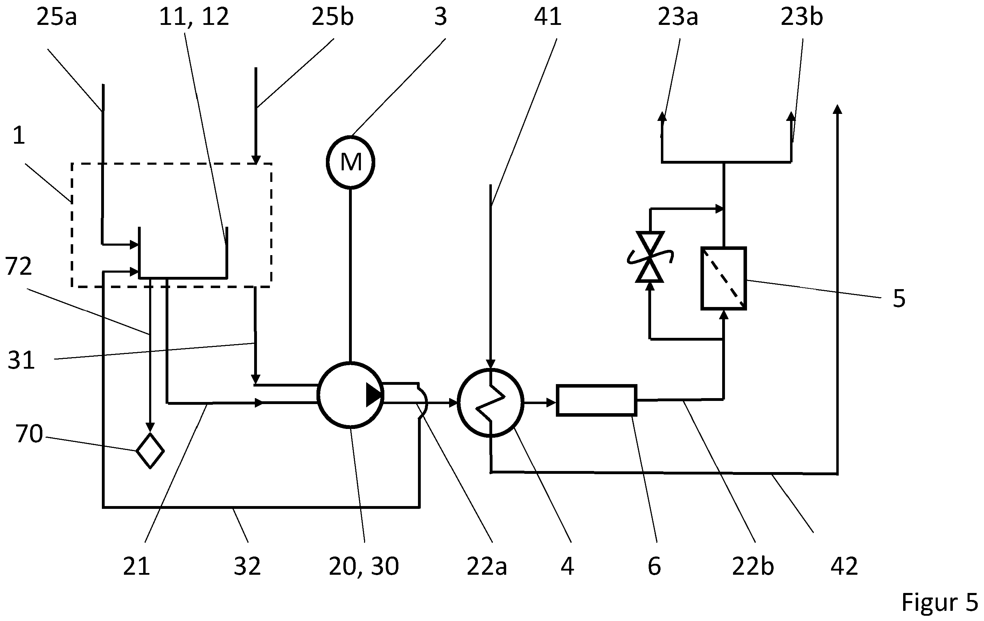

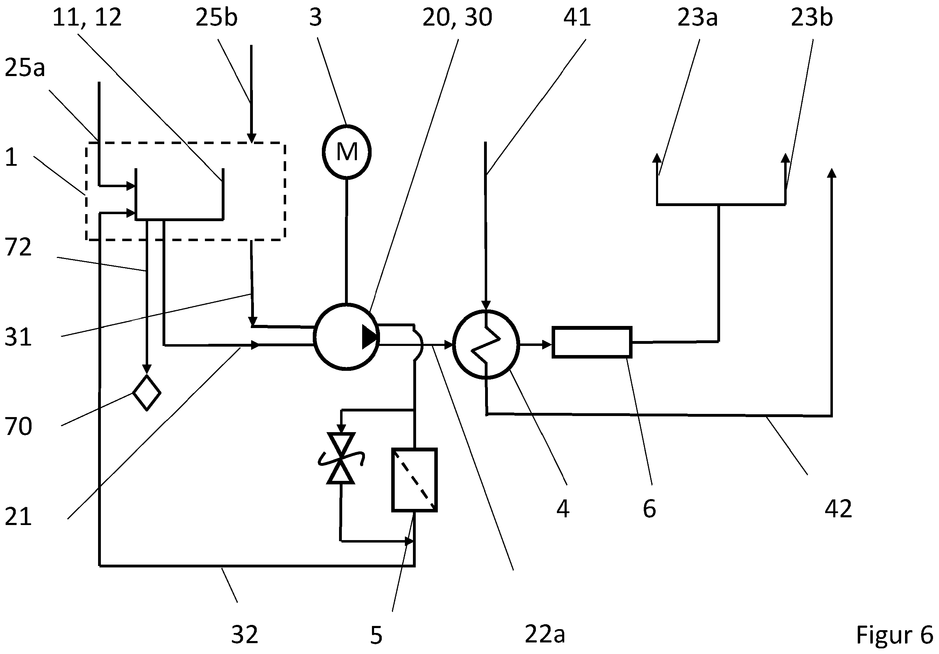

In alternativen Ausführungsbeispielen wie z.B. in den Ausführungsbeispielen der Figuren 5 und 6, kann sich die Druckleitung 22 stromauf des Maschinenaggregats A in eine erste Versorgungsleitung 23a und eine zweite Versorgungsleitung 23b teilen. Die erste Versorgungsleitung 23a und die zweite Versorgungsleitung 23b können zu demselben Maschinenaggregat A führen oder zu verschiedenen Maschinenaggregaten A.

Die zweite Arbeitsflut ist auf der zweiten Niederdruckseite über die zweite Saugleitung 31 mit dem zweiten Rücklauf 25b verbunden, insbesondere fluidisch verbunden. Die zweite Saugleitung 31 mündet mit ihrem stromaufwärtigen Ende in den zweiten Rücklauf 25b, bevor das Fluid über eine Ausgleichsleitung in das Reservoir 11, 12 strömen kann. Über die Ausgleichsleitung kann das Fluid, welches über den zweiten Rücklauf 25b und die zweite Rücklauföffnung 25B in das Gehäuse 1 strömt, im Notfall in das Reservoir 11, 12, insbesondere in den Nebensumpf 12, abfließen, sollte beispielsweise die zweite Pumpe 30 ausfallen oder die Saugleistung der zweiten Pumpe 30 zu gering sein, um sämtliches über den zweiten Rücklauf 25b zurückströmende Fluid abzusaugen.

Die zweite Saugleitung 31 kann beispielsweise wie in den Figuren 1-3 gezeigt, unterhalb der zweiten Rücklauföffnung 25B in das Gehäuse 1 münden. Die zweite Rücklauföffnung 25B kann dabei abseits des Reservoirs 11, 12 in das Gehäuse 1 münden, sodass Fluid, welches über die zweite Rücklauföffnung 25B in das Gehäuse 1 strömt, nicht unmittelbar in das Reservoir 11, 12 strömt. Das stromaufwärtige Ende der zweiten Saugleitung 31 kann im Bereich der Rücklauföffnung 25B münden. Die zweite Arbeitsflut ist auf der zweiten Hochdruckseite über die zweite Druckleitung 32 mit dem Reservoir 11, 12, insbesondere dem Hauptsumpf 11, fluidisch verbunden.

Unabhängig von der Ausgestaltung der zweiten Saugleitung 31 mündet die zweite Saugleitung 31 mit ihrem stromaufwärtige Ende in den zweiten Rücklauf 25b, bevor das Fluid in das Reservoir 11, 12 strömt. Das bedeutet, die zweite Pumpe 30 saugt das von dem Maschinenaggregat A zurückströmende Fluid an und führt es über die zweite Druckleitung 32 dem Reservoir 11, 12, insbesondere dem Hauptsumpf 11, zu.

Zur Veranschaulichung des Prinzips der aktiven Versorgung des Reservoirs 11, 12, insbesondere des Hauptsumpfs 11, mit Fluid durch die zweite Pumpe 30, ist in Figur 4 auf die Darstellung eines Filtermoduls 5 und/oder eines Wärmetauschers 4 verzichtet worden. Dies dient nur dem besseren Verständnis. So kann beispielsweise stromaufwärts oder stromab des Pumpenmoduls 20, 30 in dem Versorgungsstrom ein Filtermodul 5 ausgebildet sein. Auch kann beispielsweise in dem Teilstrom ein Filtermodul 5 ausgebildet sein. Auch kann stromaufwärts oder stromab des Pumpenmoduls 20, 30 zusätzlich oder alternativ zu dem Filtermodul 5 ein Wärmetauscher 4 ausgebildet sein.

In Figur 5 ist beispielsweise ein Fluidfördersystem mit einem in dem Versorgungsstrom ausgebildeten Wärmetauscher 4 und einem in dem Versorgungsstrom ausgebildeten Filtermodul 5 gezeigt. Das Fluidfördersystem der Figur 5 unterscheidet sich vom Prinzip der aktiven Versorgung des Reservoirs 11, 12, insbesondere des Hauptsumpfs 11, mit Fluid her nicht von dem Ausführungsbeispiel der Figur 4. Die Ausführungen von Figur 4 gelten entsprechend. Das Fluidfördersystem kann entsprechend dem Fluidfördersystem der Figuren 1-3 ausgebildet sein, sodass die Ausführungen zu den Figuren 1-3, sofern sie nicht im Widerspruch stehen, gleichfalls gelten.

Wie in Figur 5 gezeigt, ist in dem Versorgungsstrom, insbesondere in der ersten Druckleitung 22 ein Wärmetauscher 4 und ein Filtermodul 5 angeordnet. Das Fluid strömt von dem Pumpenmodul 20,30 über die erste Druckleitung 22, insbesondere einen ersten Abschnitt 22a der Druckleitung 22, zu dem Wärmetauscher 4. Alternativ könnte der Wärmetauscher 4 auch in der ersten Saugleitung 21 angeordnet sein.

Im Falle des Fluidfördersystems nach Figur 1 strömt das Fluid von dem Pumpenmodul 20, 30 über den ersten Druckanschluss 22' in das Gehäuse 1 zurück und wird von dort über den ersten Abschnitt der Druckleitung 22a in den Wärmetauscher 4 geleitet. In dem Wärmetauscher 4 gibt das Fluid zur Versorgung des Maschinenaggregats A thermische Energie an das Fluid des Wärmetauschers 4, insbesondere Kühlmittel, ab und wird dadurch gekühlt. Das Fluid des Wärmetauschers 4 durchströmt den Wärmetauscher 4, wobei die beiden Fluide nicht miteinander vermischen. Das Fluid des Wärmetauschers 4 strömt über eine erste Kühlmittelleitung 41 in den Wärmetauscher 4 und tritt über eine zweite Kühlmittelleitung 42 aus dem Wärmetauscher 4 aus.

Nachdem das Fluid zur Versorgung des Maschinenaggregats A den Wärmetauscher 4 durchströmt hat, strömt es über einen zweiten Abschnitt 22b der ersten Druckleitung 22 in Richtung des Maschinenaggregats A und des Filtermoduls 5 weiter. In dem zweiten Abschnitt 22b der ersten Druckleitung 22 kann ein Sensor 6, insbesondere ein Temperatursensor 6 zur Messung der Temperatur des Fluids, ausgebildet sein.

Nach dem Wärmetauscher 4 durchströmt das Fluid das Filtermodul 5. Das Filtermodul 5 umfasst einen Filter. Das Filtermodul 5 umfasst einen Bypassventil mit einer ersten Ventilstellung und einer zweiten Ventilstellung. In der ersten Ventilstellung lässt das Bypassventil keinen Fluidstrom durch das Bypassventil zu. In der zweiten Ventilstellung lässt das Bypassventil einen Fluidstrom durch das Bypassventil, insbesondere unter Umgehung des Filters, zu.

Nach dem Durchströmen des Filtermoduls 5 wird der Versorgungsstrom der Figur 5 in einen ersten Versorgungsteilstrom und einen zweiten Versorgungsteilstrom geteilt, wobei der erste Versorgungsteilstrom über die erste Versorgungsleitung 23a und der zweite Versorgungsteilstrom über die zweite Versorgungsleitung 23b dem Maschinenaggregat A oder den Maschinenaggregaten A zugeführt werden. Auf diese Weise können beispielsweise zwei Stellen des Maschinenaggregats A und/oder zwei Maschinenaggregate A mit Fluid versorgt werden.

Die Reihenfolge, in welcher das Fluid den Wärmetauscher 4 und das Filtermodul 5 durchströmt, kann umgedreht werden. So durchströmt das Fluid beispielsweise in dem Ausführungsbeispiel der Figuren 1-3 zuerst den Wärmetauscher 4 und im Anschluss das Filtermodul 5. In der Figur 1 durchströmt das Fluid das Filtermodul 5 und wird im Anschluss über den ersten Abschnitt 22a der Druckleitung 22 dem Wärmetauscher 4 über das Gehäuse 1 zugeführt. Nach dem Durchströmen des Wärmetauschers 4 der Figur 1 gelangt das Fluid in das Gehäuse 1 zurück und wird dort über die erste Versorgungsleitung 23a und die zweite Versorgungsleitung 23b in zwei Ströme aufgeteilt.

Auch können der Wärmetauscher 4 und das Filtermodul 5 beide in dem Teilstrom des Fluidfördersystems anstatt in dem Versorgungsstrom angeordnet sein.

Das Ausführungsbeispiel der Figur 6 unterscheidet sich von den Ausführungsbeispielen der Figuren 4 und 5 dahingehend, dass das Filtermodul 5 in dem Teilstrom angeordnet ist, während der Wärmetauscher 4 in dem Versorgungsstrom angeordnet ist. Die Ausführungen zu den Figuren 1-5 gelten entsprechend, sofern sie nicht im Widerspruch stehen.

Das Filtermodul 5 der Figur 6 ist stromab der zweiten Pumpe 30 angeordnet. Auf diese Weise filtert das Filtermodul 5 das Fluid des Teilstroms. Da das Fluid des Versorgungsstroms und das Fluid des Teilstroms in dem Reservoir 11, 12 miteinander vermischt werden, wird das Fluid des gesamten Fluidfördersystems mit der Zeit gefiltert.

### Bezugszeichenliste

- 1: Gehäuse
- 2: Pumpengehäuse
- 3: Antrieb
- 4: Wärmetauscher
- 5: Filtermodul
- 6: Temperatursensor
- 11: Hauptsumpf
- 12: Nebensumpf
- 13: Schwallblech
- 20: erste Pumpe
- 21: erste Saugleitung
- 21': erster Sauganschluss
- 22: erste Druckleitung
- 22a: erster Abschnitt der ersten Druckleitung
- 22b: zweiter Abschnitt der ersten Druckleitung
- 22': erster Druckanschluss
- 23a: erste Versorgungsleitung / dritter Abschnitt der ersten Druckleitung
- 23b: zweite Versorgungsleitung / vierter Abschnitt der ersten Druckleitung
- 25a: erster Rücklauf
- 25b: zweiter Rücklauf
- 25A: erste Rücklauföffnung
- 25B: zweite Rücklauföffnung
- 30: zweite Pumpe
- 31: zweite Saugleitung
- 31': zweiter Sauganschluss
- 32: zweite Druckleitung
- 32': zweiter Druckanschluss
- 41: erste Kühlmittelleitung
- 42: zweite Kühlmittelleitung
- 70: Ablassschraube
- 72: Ablass

## Patentansprüche

1. Fluidfördersystem zur Versorgung zumindest eines Maschinenaggregats (A) mit Fluid, insbesondere zur Versorgung eines Motors und/oder eines Getriebes eines Kraftfahrzeugs, das Folgendes umfasst:
a. eine erste Pumpe (20) und eine zweite Pumpe (30),
b. einen Antrieb (3) zum Antreiben der ersten Pumpe (20) und/oder der zweiten Pumpe (30),
c. ein Gehäuse (1) mit einem Reservoir (11, 12) für die Bevorratung des Fluids, und
d. ein Filtermodul (5) zur Filterung des Fluids,
e. wobei die erste Pumpe (20) Fluid aus dem Reservoir (11,12) in einem Versorgungsstrom zum Maschinenaggregat (A) fördert und
f. die zweite Pumpe (30) stromab des Maschinenaggregats (A) angeordnet ist und einen Teil des Fluids stromab des Maschinenaggregats (A) in einem Teilstrom in das Reservoir (11, 12) fördert und
g. wobei das Fluid des Teilstroms von einer Stelle abseits des Reservoirs (11, 12) aus dem Gehäuse (1) in das Reservoir gefördert wird,
h. das Filtermodul (5) in dem Teilstrom ausgebildet ist,
i. wobei sich der Versorgungsstrom stromabwärts des Reservoirs (11,12) in wenigstens einen ersten Versorgungsteilstrom zur Versorgung des Maschinenaggregats (A) und einen von dem ersten Versorgungsteilstrom fluidisch getrennten zweiten Versorgungsteilstrom zur Versorgung des selben oder eines weiteren Maschinenaggregats (A) teilt, und
j. wobei die zweite Pumpe (30) das Fluid des zweiten Versorgungsteilstroms ansaugt, und
k. das Fluid des ersten Versorgungsteilstroms, das nicht durch den Teilstrom gefördert wird, und das Fluid des Teilstroms bzw. des zweiten Versorgungsteilstroms in dem Reservoir miteinander vermischt werden.

2. Fluidfördersystem nach dem vorhergehenden Anspruch, wobei das Reservoir (11,12) in einem Gehäuse (1) ausgebildet ist und das Maschinenaggregat (A) über wenigstens einen Rücklauf mit dem Gehäuse (1) fluidisch verbindbar ist und der Teilstrom Fluid aus dem Rücklauf (25b) ansaugt.

3. Fluidfördersystem nach einem der vorhergehenden Ansprüche, wobei das Fluidfördersystem ein mehrkreisiges, insbesondere zweikreisiges Pumpenmodul umfasst, und wobei die erste Pumpe (20) und die zweite Pumpe (30) Bestandteil des Pumpenmoduls sind.

4. Fluidfördersystem nach einem der vorhergehenden Ansprüche, wobei stromaufwärts der Teilung des Versorgungsstroms im Versorgungsstrom kein Filtermodul oder ein Hilfsfiltermodul ausgebildet ist, wobei das Hilfsfiltermodul sofern vorhanden größere und/oder weniger Partikel als das Filtermodul (5) des Teilstroms aus dem Fluid abscheidet.

5. Fluidfördersystem nach einem der vorhergehenden Ansprüche, wobei das Fluid des zweiten Versorgungsteilstroms, bevor es in das Reservoir (11, 12) zurückströmt, durch das Filtermodul (5) des Teilstroms gefiltert wird.

6. Fluidfördersystem nach einem der vorhergehenden Ansprüche, wobei das Filtermodul (5) ein Ölfilter eines Kraftfahrzeugs ist und das Filtermodul (5) bei einer Partikelgröße > 6 µm wenigstens 20 % der Partikel abscheidet und bei einer Partikelgröße > 14 µm wenigstens 65 % der Partikel abscheidet.

7. Fluidfördersystem nach einem der vorhergehenden Ansprüche, wobei das Gehäuse (1) wenigstens eine mit dem Maschinenaggregat (A) verbindbare Rücklauföffnung (25A, 25B) umfasst und der Teilstrom das Fluid auf der dem Maschinenaggregat (A) abgewandten Seite der Rücklauföffnung (25B) absaugt.

8. Fluidfördersystem nach dem vorhergehenden Anspruch, wobei die Rücklauföffnung (25A, 25B) an ihrer dem Maschinenaggregat (A) zugewandten Seite ein Sieb aufweist.

9. Fluidfördersystem nach einem der beiden vorhergehenden Ansprüche, wobei der zweite Versorgungsteilstrom stromabwärts des Maschinenaggregats (A) über die Rücklauföffnung (25A, 25B) in das Gehäuse (1) zurückströmt.

10. Fluidfördersystem nach einem der vorhergehenden Ansprüche, wobei das Fluid durch den Teilstrom in dem Gehäuse (1) umgewälzt wird.

11. Fluidfördersystem nach einem der vorhergehenden Ansprüche, wobei der Teilstrom mit seinem stromabwärtigen Ende in das Reservoir (11, 12), insbesondere in einen Hauptsumpf (11) des Reservoirs (11, 12), mündet.

12. Fluidfördersystem nach einem der vorhergehenden Ansprüche, wobei das Reservoir einen Hauptsumpf (11) und einen Nebensumpf (12) umfasst, und wobei innerhalb des Gehäuses (1) und außerhalb des Reservoirs (11, 12) befindliches Fluid durch den Teilstrom in das Reservoir (11, 12), insbesondere in den Hauptsumpf (11), gefördert wird.

13. Fluidfördersystem nach einem der vorhergehenden Ansprüche, wobei der Volumenstrom des Versorgungsstroms größer ist als der Volumenstrom des Teilstroms, insbesondere wenigstens doppelt so groß ist.

14. Fluidfördersystem nach einem der vorhergehenden Ansprüche, wobei das Fluidfördersystem einen Wärmetauscher (4) umfasst und der Wärmetauscher (4) in dem Versorgungsstrom angeordnet ist.

## Claims

1. A fluid delivery system for supplying fluid to at least one machine assembly (A), in particular an engine and/or transmission of a motor vehicle, comprising:
a. a first pump (20) and a second pump (30);
b. a drive (3) for driving the first pump (20) and/or the second pump (30);
c. a housing (1) comprising a reservoir (11, 12) for storing the fluid; and
d. a filter module (5) for filtering the fluid,
e. wherein the first pump (20) delivers fluid from the reservoir (11, 12) to the machine assembly (A) in a supply flow and
f. the second pump (30) is arranged downstream of the machine assembly (A) and delivers some of the fluid into the reservoir (11, 12) in a sub-flow downstream of the machine assembly (A),
g. wherein the fluid of the sub-flow is delivered from the housing (1) into the reservoir (11, 12) from a location away from the reservoir (11, 12),
h. wherein the filter module (5) is embodied in the sub-flow,
i. wherein the supply flow is divided downstream of the reservoir (11, 12) into at least a first supply sub-flow for supplying the machine assembly (A) and a second supply sub-flow, which is fluidically separated from the first supply sub-flow, for supplying the same machine assembly (A) or another machine assembly (A), and
j. wherein the second pump (30) suctions the fluid of the second supply sub-flow and
k. the fluid of the first supply sub-flow which is not delivered by the sub-flow and the fluid of the sub-flow or second supply sub-flow are intermixed in the reservoir (11, 12).

2. The fluid delivery system according to the preceding claim, wherein the reservoir (11, 12) is embodied in a housing (1), and the machine assembly (A) can be fluidically connected to the housing (1) via at least one return line, and the sub-flow suctions fluid from the return line (25b).

3. The fluid delivery system according to any one of the preceding claims, wherein the fluid delivery system comprises a multi-circuit pump module, in particular a dual-circuit pump module, and wherein the first pump (20) and the second pump (30) are part of the pump module.

4. The fluid delivery system according to any one of the preceding claims, wherein no filter module or an auxiliary filter module is embodied in the supply flow, upstream of where the supply flow is divided, wherein the auxiliary filter module, if provided, separates larger and/or fewer particles from the fluid than the filter module (5) of the sub-flow.

5. The fluid delivery system according to any one of the preceding claims, wherein the fluid of the second supply sub-flow is filtered by the filter module (5) of the sub-flow before it flows back into the reservoir (11, 12).

6. The fluid delivery system according to any one of the preceding claims, wherein the filter module (5) is an oil filter of a motor vehicle and separates at least 20% of the particles larger than 6 µm and at least 65% of the particles larger than 14 µm.

7. The fluid delivery system according to any one of the preceding claims, wherein the housing (1) comprises at least one return opening (25A, 25B) which can be connected to the machine assembly (A), and the sub-flow aspirates the fluid on the side of the return opening (25B) which faces away from the machine assembly (A).

8. The fluid delivery system according to the preceding claim, wherein the return opening (25A, 25B) comprises a screen on its side which faces the machine assembly (A).

9. The fluid delivery system according to any one of the preceding two claims, wherein the second supply sub-flow flows back into the housing (1) via the return opening (25A, 25B) downstream of the machine assembly (A).

10. The fluid delivery system according to any one of the preceding claims, wherein the fluid is circulated by the sub-flow in the housing (1).

11. The fluid delivery system according to any one of the preceding claims, wherein the downstream end of the sub-flow emerges into the reservoir (11, 12), in particular a main sump (11) of the reservoir (11, 12).

12. The fluid delivery system according to any one of the preceding claims, wherein the reservoir (11, 12) comprises a main sump (11) and a secondary sump (12), and wherein fluid situated within the housing (1) and outside the reservoir (11, 12) is delivered into the reservoir (11, 12), in particular the main sump (11), by the sub-flow.

13. The fluid delivery system according to any one of the preceding claims, wherein the volume flow of the supply flow is larger than and in particular at least twice as large as the volume flow of the sub-flow.

14. The fluid delivery system according to any one of the preceding claims, wherein the fluid delivery system comprises a heat exchanger (4), and the heat exchanger (4) is arranged in the supply flow.

## Revendications

1. Système de refoulement de fluide pour alimenter au moins un ensemble mécanique (A) en fluide, en particulier pour alimenter un moteur et / ou une transmission d'un véhicule automobile, comprenant :
a. une première pompe (20) et une seconde pompe (30) ;
b. un entraînement (3) pour entraîner la première pompe (20) et / ou la seconde pompe (30) ;
c. un boîtier (1) comportant un réservoir (11, 12) pour stocker le fluide ; et
d. un module de filtre (5) pour filtrer le fluide,
e. la première pompe (20) refoulant du fluide depuis le réservoir (11, 12) vers l'ensemble mécanique (A) dans un écoulement d'alimentation,
f. la seconde pompe (30) étant disposée en aval de l'ensemble mécanique (A) et refoulant une partie du fluide dans le réservoir (11, 12) en écoulement partiel en aval de l'ensemble mécanique (A),
g. le fluide de l'écoulement partiel étant refoulé depuis le boîtier (1) dans le réservoir (11, 12) à partir d'un point à l'écart du réservoir (11, 12),
h. le module de filtre (5) étant formé dans l'écoulement partiel,
i. l'écoulement d'alimentation se divisant en aval du réservoir (11, 12) en au moins un premier écoulement d'alimentation partiel pour alimenter l'ensemble mécanique (A) et un second écoulement d'alimentation partiel, qui est fluidiquement séparé du premier écoulement d'alimentation partiel, pour alimenter le même ensemble mécanique (A) ou un autre ensemble mécanique (A),
j. la seconde pompe (30) aspirant le fluide du second écoulement d'alimentation partiel, et
k. le fluide du premier écoulement d'alimentation partiel, qui n'est pas refoulé par l'écoulement partiel, et le fluide de l'écoulement partiel ou du second écoulement d'alimentation partiel étant mélangés l'un à l'autre dans le réservoir (11, 12).

2. Système de refoulement de fluide selon la revendication précédente, dans lequel le réservoir (11, 12) est formé dans un boîtier (1), l'ensemble mécanique (A) pouvant être relié fluidiquement au boîtier (1) via au moins une conduite de reflux, et l'écoulement partiel aspirant du fluide depuis la conduite de reflux (25b).

3. Système de refoulement de fluide selon l'une quelconque des revendications précédentes, dans lequel le système de refoulement de fluide comprend un module de pompe à plusieurs circuits, en particulier un module de pompe à deux circuits, la première pompe (20) et la seconde pompe (30) faisant partie du module de pompe.

4. Système de refoulement de fluide selon l'une quelconque des revendications précédentes, dans lequel aucun module de filtre n'est formé ou seulement un module de filtre auxiliaire est formé dans l'écoulement d'alimentation en amont de la division de l'écoulement d'alimentation, le module de filtre auxiliaire, lorsqu'il est présent, séparant des particules plus grandes et / ou moins de particules à partir du fluide que le module de filtre (5) de l'écoulement partiel.

5. Système de refoulement de fluide selon l'une quelconque des revendications précédentes, dans lequel le fluide du second écoulement d'alimentation partiel est filtré par le module de filtre (5) de l'écoulement partiel avant de refluer dans le réservoir (11, 12).

6. Système de refoulement de fluide selon l'une quelconque des revendications précédentes, dans lequel le module de filtre (5) est un filtre à huile d'un véhicule automobile et le module de filtre (5) sépare au moins 20 % des particules d'une taille de particule supérieure à 6 µm et au moins 65 % des particules d'une taille de particule supérieure à 14 µm.

7. Système de refoulement de fluide selon l'une quelconque des revendications précédentes, dans lequel le boîtier (1) comprend au moins une ouverture de reflux (25A, 25B) pouvant être reliée à l'ensemble mécanique (A), et l'écoulement partiel évacue le fluide sur le côté de l'ouverture de reflux (25B) opposé à l'ensemble mécanique (A).

8. Système de refoulement de fluide selon la revendication précédente, dans lequel l'ouverture de reflux (25A, 25B) présente un tamis sur son côté faisant face à l'ensemble mécanique (A).

9. Système de refoulement de fluide selon l'une quelconque des deux revendications précédentes, dans lequel le second écoulement d'alimentation partiel reflue dans le boîtier (1) via l'ouverture de reflux (25A, 25B) en aval de l'ensemble mécanique (A).

10. Système de refoulement de fluide selon l'une quelconque des revendications précédentes, dans lequel le fluide est mis en circulation dans le boîtier (1) par l'écoulement partiel.

11. Système de refoulement de fluide selon l'une quelconque des revendications précédentes, dans lequel l'extrémité aval de l'écoulement partiel débouche dans le réservoir (11, 12), en particulier dans un puisard principal (11) du réservoir (11, 12).

12. Système de refoulement de fluide selon l'une quelconque des revendications précédentes, dans lequel le réservoir (11, 12) comprend un puisard principal (11) et un puisard secondaire (12), du fluide situé à l'intérieur du boîtier (1) et à l'extérieur du réservoir (11, 12) étant refoulé dans le réservoir (11, 12), en particulier dans le puisard principal (11), par l'écoulement partiel.

13. Système de refoulement de fluide selon l'une quelconque des revendications précédentes, dans lequel le débit volumique de l'écoulement d'alimentation est supérieur, en particulier au moins deux fois supérieur, au débit volumique de l'écoulement partiel.

14. Système de refoulement de fluide selon l'une quelconque des revendications précédentes, dans lequel le système de refoulement de fluide comprend un échangeur de chaleur (4) disposé dans l'écoulement d'alimentation.
